(19) **Europäisches Patentamt / European Patent Office / Office européen des brevets**

(11) **EP 1 736 812 B1**

(12) **EUROPEAN PATENT SPECIFICATION**

(45) Date of publication and mention
of the grant of the patent:
**14.04.2010 Bulletin 2010/15**

(51) Int Cl.:
*G02B 27/01* *(2006.01)*     *G02B 27/22* *(2006.01)*
*G02B 6/00* *(2006.01)*     *H04N 13/00* *(2006.01)*

(21) Application number: **06003534.2**

(22) Date of filing: **12.12.2001**

(54) **Wearable display system comprising a waveguide**

Tragbares Anzeigesystem

Système d'affichage portable

(84) Designated Contracting States:
**DE FR GB NL**

(30) Priority: **15.12.2000   US 255448 P**
           **26.12.2000   US 257283 P**
           **10.01.2001   KR 2001001350**

(43) Date of publication of application:
**27.12.2006   Bulletin 2006/52**

(62) Document number(s) of the earlier application(s) in
accordance with Art. 76 EPC:
**01129638.1 / 1 215 522**

(73) Proprietor: **Samsung Electronics Co., Ltd.**
**Yeongtong-gu**
**Suwon-si, Gyeonggi-do (KR)**

(72) Inventors:
  • **Song, Young-ran**
    **Paldal-gu**
    **Suwon-si**
    **Gyeonggi-do (KR)**
  • **Song, Seok-ho**
    **Guri-si**
    **Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 535 402     US-A- 5 812 186**

  • **PATENT ABSTRACTS OF JAPAN vol. 2000, no. 05, 14 September 2000 (2000-09-14) & JP 2000 056259 A (FUJI XEROX CO LTD), 25 February 2000 (2000-02-25)**
  • **PATENT ABSTRACTS OF JAPAN vol. 2000, no. 12, 3 January 2001 (2001-01-03) & JP 2000 267041 A (FUJI XEROX CO LTD), 29 September 2000 (2000-09-29)**

**Description**

The present invention relates to personal display systems, and more particularly, to a wearable display system capable of transmitting a display signal through an eyeglass-type or goggle-type optical device to be displayed at a location near the eye of a user.

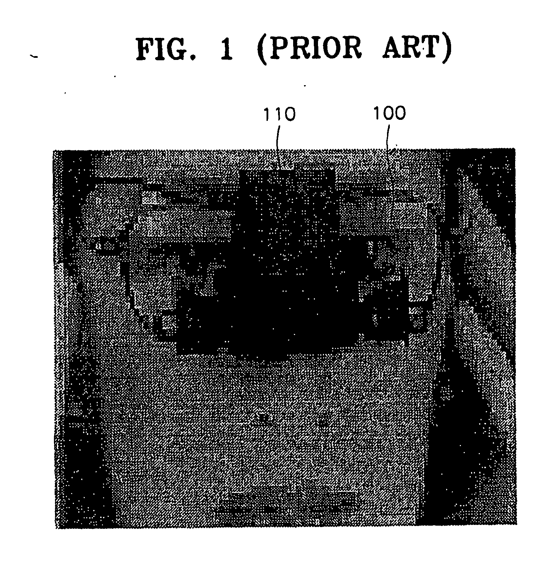

Conventional optical display systems used in the military, in medicine or for personal entertainment, which are generally known as head mounted display (HMD) systems, have been designed for users to see video signals via an eyeglass-type, goggle-type or helmet-type wearable device. These personal display systems allow users to receive video information while moving from place to place. FIG. 1 shows one example of the appearance of an HMD. Referring to FIG. 1, the HMD is made of a general eyeglasses 100 and an image-driving unit 110 that is attached to the center of the eyeglasses 100. The driving unit 110 is bulky, heavy and unpleasant in appearance. The large volume and heavy weight of the image-driving unit 110 is due to a lot of optical elements constituting the unit.

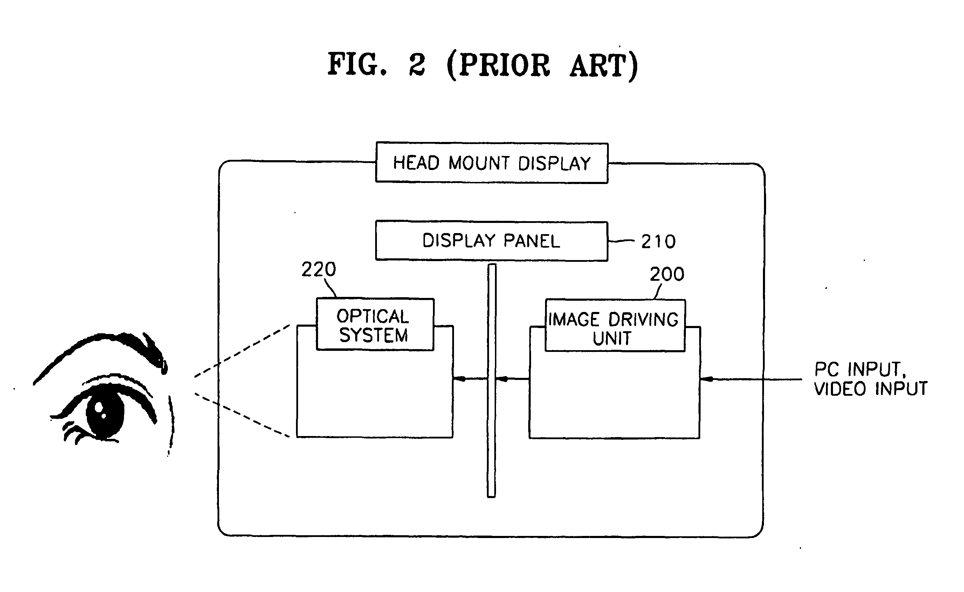

FIG. 2 shows the structure of a general HMD. In FIG. 2, the HMD comprises an image driving unit 200, a display panel 210 and an optical system 220. The image driving unit 200 stores a signal received from exterior sources such as a personal computer or video device (not shown) and processes the received signal to display it on the display panel 210 such a liquid crystal display (LCD) panel. The optical system 220 makes the signal displayed on the display panel 210 look as an appropriate virtual image to the eye of a user via an image-enlarging optical system. The HMD can further include other head-mounted devices or cable for receiving signals from an external source.

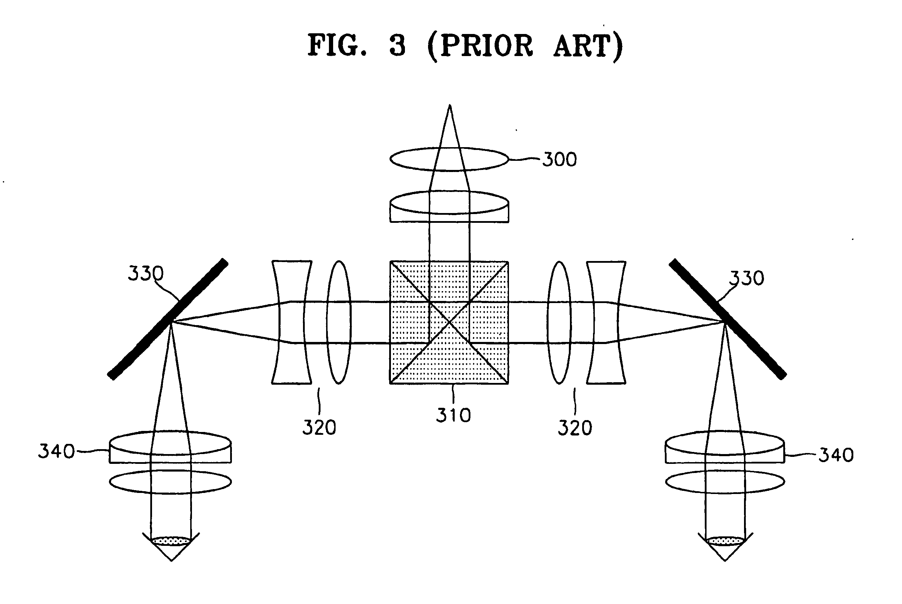

FIG. 3 shows the general structure of the optical system 220 of the general HMD of FIG. 2. The conventional optical system 220 is composed of a collimating lens 300, an X prism 310, focusing lenses 320, fold mirrors 330 and ocular lenses (or magnifying lenses) 340. The collimating lens 300 collimates the light (a signal) emitted from the display panel or the like. The X prism 310 redirects light received from the collimating lens 300 in the right and left directions. The focusing lenses 320 are separately placed on the right and left of the X prism 310 to focus collimated light redirected by the X prism 310 is focused. The fold mirrors 330 reflect the light focused by the focusing lenses 320 toward the eyes of a user. The ocular lenses (or a magnifying lenses) 340 allow small signals passing through the above-described optical elements to appear to the eyes of a user. At this time, if the light propagating through the optical system 220 is polychromatic, lenses for removing chromatic aberration must be used as the ocular lenses 340.

In a general HMD wearable display system, an optical system employs several precisely designed optical elements, such as a collimating lens, an X prism, focusing lenses, folder lenses, ocular lenses and the like, as described above. For this reason, it is difficult to manufacture the general HMD wearable display system, that is, a lot of effort and time are required. Even if the lenses and elements are designed precisely, additional difficulties in aligning the lenses and devices together may occur. Moreover, a special eyepiece must be additionally designed to remove chromatic aberration of a color signal. Therefore, the general HMD wearable display system is expensive to manufacture. In addition, the conventional optical system is bulky and heavy due to the use of a plurality of optical devices, so that it is inconvenient for a user to wear the HMD

US-A-5 812 186 discloses a three-dimensional display method and apparatus. In a device, two-dimensional image segments are formed over predetermined positions of planes substantially parallel to planar faces of waveguides such that the image segments propagate along the length of the waveguide to emerge over a solid viewing angle. The two-dimensional image segments form a composite image which consists of a collection of image points that have been mapped from planes parallel to the waveguides to planes in which the apparent relative position of selected image points in the two-dimensional image segments are changed with respect to one another to create a three-dimensional visual effect. Total internal reflection in a planar waveguide converts a two-dimensional image in a plane parallel to the planes at which total internal reflection occurs into a series of receding "step levels" when the waveguide is viewed through an edge which is perpendicular to the planes of total internal reflection. Instead of being viewed through its edge, the waveguide comprises a further section out of which light may be coupled to a prism, and thence to the viewer, by means of an electrically addressable "light valve". The mechanism of a "light valve" is to permit light to escape from the waveguide in a selected plane, and each of the planes which may be selected corresponds to a different value of a y-coordinate of the three-dimensional image. To display a three-dimensional picture, it is necessary to switch between the y "slices" sufficiently rapidly that the images are integrated by the brain to form a continuous, three-dimensional image. Either a stack of waveguides or a single waveguide requires a method for the formation of an image in the (x,z') plane of a planar waveguide in response to electrical signals, these electrical signals being the output of, for instance, any suitable well-known computer. There are several applicable methods and apparatus for modulating the intensity of light propagating in a planar waveguide in response to electrical signals applied in the (x.z') plane. The light can be admitted to the waveguide at points (x.y') or escape the waveguide at points (x,z'), be absorbed or generated at these points in the waveguide, or be changed in polarization at these points in the waveguide. Light which is trapped within the waveguide without application of the electric field to the liquid crystalline material may escape the waveguide when the electric field is applied, if this result in an increase of critical angle for total internal reflection with respect to the normal to the plane of reflection.

EP-A-0 535 402 describes a waveguide virtual image display which includes and image generation apparatus providing a real image at an inlet of an optical waveguide. The real image is reflected a plurality of time within the optical waveguide by diffractive optical elements that magnify and filter the real image and produce a virtual image and a viewing aperture. Light rays from the real image are diffracted by a first lens onto a second lens where additional magnification occurs. The light rays are then directed along a light path through an optical waveguide, being reflected at predetermined first and second areas, until the light rays exit the optical waveguide at a virtual image outlet. Depending on the optical properties required by the display, the first and/or second areas may include additional diffractive optical elements providing additional optical power, filtering, aberration correction, etc. Diffractive grating defines a viewing aperture, through which an operator looks to view an enlarge virtual image of the real image.

To solve the above problems, it is therefore the object of the present invention to provide an improved variable display system that is simple to manufacture, removes chromatic aberrations using gratings, and realizes three dimensional images.

This object is solved by the subject matter of the independent claims.

Preferred embodiments are defined by the dependent claims.

Accordingly, to achieve the above object, there is provided a wearable display system having at least one display panel for outputting at least one signal processed a predetermined way, comprising: at least one waveguide for guiding the propagation of the at least one signal output from the at least one display panel; a plurality of gratings for diffracting the at least one signal propagating through the at least one waveguide: and at least one magnifying lens for magnifying the at least one signal diffracted by at least one of the gratings.

It is preferable to have the plurality of gratings comprising, at least one first grating for diffracting the at least one signal output from the at least one display panel so that the at least one signal propagates through the at least one waveguide; and at least one second grating for diffracting the at least one signal propagating through the at least one waveguide after being diffracted by the at least one first grating.

It is preferable to have the plurality of gratings comprising, at least one first grating for reflecting the at least one signal output from the at least one display panel and incident on the at least one first grating at a predetermined incidence angle, at a predetermined reflection angle; and at least one second grating for reflecting the at least one signal propagating through the at least one waveguide and incident upon the at least one second grating at the same angle as the predetermined reflection angle at the at least one first grating, at the same angle as the predetermined incidence angle at the at least one first grating.

It is preferable to have the plurality of gratings comprising, at least one first grating for transmitting the at least one signal output from the at least one display panel and incident on the at least one first grating at a predetermined incidence angle, at a predetermined transmission angle to propagate through the at least one waveguide; and at least one second grating for transmitting the at least one signal propagating through the at least one waveguide and incident upon the at least one second grating at the same angle as the predetermined transmission angle at the at least one first grating, at the same angle as the predetermined incidence angle at the at least one first grating.

It is preferable to have the plurality of gratings comprising, at least one first grating for reflecting the at least one signal output from the at least one display panel and incident on the at least one first grating at a predetermined incidence angle at a predetermined reflection angle; and at least one second grating for transmitting the at least one signal propagating through the at least one waveguide and then incident upon the at least one second grating at the same angle as the predetermined reflection angle at the at least one first grating, at the same angle as the predetermined incidence angle at the at least one first grating.

It is preferable to have the plurality of gratings comprising, at least one first grating for transmitting the at least one signal output from the at least one display panel and incident upon the at least one first grating at a predetermined incidence angle, at a predetermined transmission angle; and at least one second grating for reflecting the at least one signal propagating through the at least one waveguide and incident upon the at least one second grating at the same angle as the predetermined transmission angle at the at least one first grating, at the same angle as the predetermined incidence angle at the at least one first grating.

It is preferable that the wearable display system further comprises at least one shutter for alternately blocking at least one signal in the waveguide to produce a three-dimensional image.

It is preferable that the at least one magnifying lens is movable along a predetermined length of the at least one waveguide.

The waveguide is preferably made of glass or plastic or particularly, acryl substance (PMMA).

It is preferable that the gratings and the waveguide are incorporated into one single-body.

It is preferable that the magnifying lens and the waveguide are incorporated into one single-body.

It is preferable that the gratings and the magnifying lens are incorporated into one single-body.

The magnifying lens is preferably formed with holographic optical element (HOE) or a diffraction optical element (DOE).

The above object and advantages of the present invention will become more apparent by describing in detail preferred embodiments thereof with reference to the attached drawings in which:

FIG. 1 is an exterior view of a conventional head mounted display (HMD);
FIG. 2 is a schematic diagram of a general conventional HMD;
FIG. 3 is a schematic diagram of the optical system in the general conventional HMD of FIG. 2;
FIGS. 4A and 4B show wearable display systems according to the present invention;
FIG. 5 is a schematic diagram of a preferred embodiment of the wearable display system according to the present invention;
FIG. 6 illustrates an example for explaining a conjugate relationship between gratings;
FIG. 7A illustrates an example of a grating;
FIGS. 7B and 7C illustrate a transmission-type grating and a reflection-type grating, respectively;
FIGS. 8A to 8H show various possible embodiments of a wearable display system of the present invention according to the types of gratings and the arrangement of gratings on a waveguide;
FIG. 9 shows another preferred embodiment of a wearable display system according to the present invention;
FIGS. 10A and 10B show other preferred embodiments of a wearable display system according to the present invention in which display panels are attached to both sides of a waveguide;
FIG. 11 shows a wearable display system according to the present invention adopting a shutter to realize a three-dimensional image;
FIGS. 12A and 12B illustrate an application of controlling an inter-pupillary distance (IPD) in a wearable display system according to the present invention;
FIG. 13 shows a preferred embodiment of a wearable display system according to the present invention having a monocular structure;
FIGS. 14A to 14H show various possible embodiments of a wearable display system according to the present invention having a monocular structure, depending on the types of gratings and the arrangement of gratings on a waveguide;
FIGS. 15A and 15B show other embodiments of a wearable display system according to the present invention having a monocular structure;
FIGS. 16A and 16B illustrate ways in which chromatic aberration is removed by gratings used in the present invention;
FIGS. 17A to 17C show gratings suitable for the present invention; and
FIGS. 18A to 18E illustrate examples of various ocular lenses.

Hereinafter, the present invention will be described in detail with reference to the attached drawings.

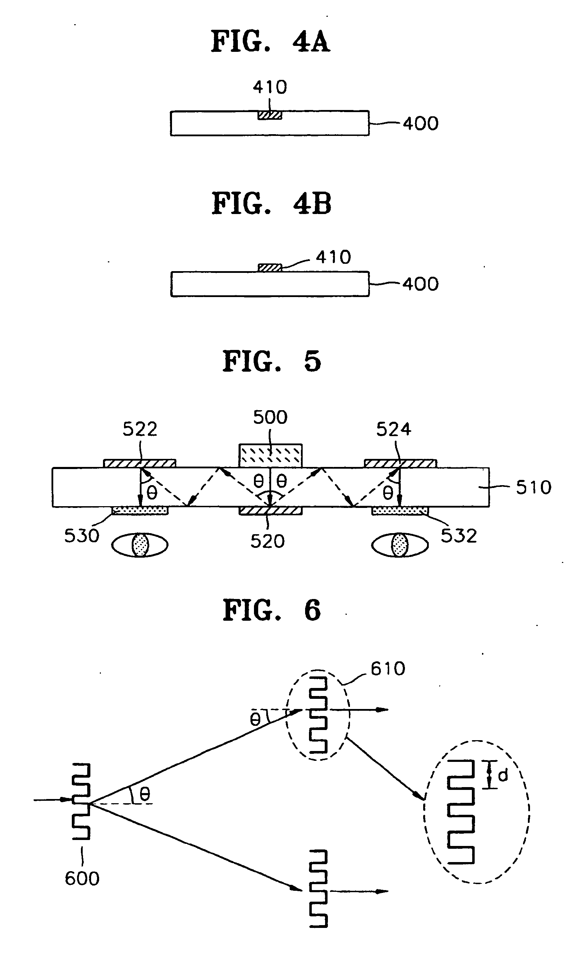

FIGS. 4A and 4B are a view of the front and of the top of a wearable display system according to the present invention, respectively. In FIGS. 4A and 4B, the wearable display system has a simple structure where a lens 400 and a display panel 410 are combined together. The wearable display system according to the present invention has a thin, light and small structure due to the use of gratings and a magnifying lens as compared to the conventional art. Thus, the wearable display system according to the present invention is easy and convenient to wear like eyeglasses, unlike existing bulky and heavy helmet-type HMDs. Further, the present invention provides a wearable display system having a module structure in which the module is attachable/detachable to conventional eyeglasses. The exterior of the wearable display system illustrated in FIGS. 4A and 4B is just an example and a variety of thin, light and small wearable display systems having different exteriors can be realized.

A wearable display system according to the present invention can be manufactured as a binocular type or a monocular type. A binocular type is designed for a user to look a display image using both of his or her eyes, whereas a monocular type allows a user to look a display image using only one of his or her eyes. In the case of a binocular type, a three-dimensional image (3D) display can be achieved, which will be described later in detail.

First, a binocular wearable display system will now be described.

FIG. 5 is a schematic diagram of preferred embodiment of a wearable display system according to the present invention. The wearable display system comprises a display panel 500; a waveguide 510, first, second and third gratings 520, 522 and 524, and magnifying lenses 530 and 532. The display panel 500 outputs a signal received from a predetermined signal source (not shown) via wire or radio (not shown). The waveguide 510 guides the propagation of light emitted from the display panel 500. The first, second and third gratings 520, 522 and 524 diffract the light passing through the waveguide so that the light can finally travel toward the eyes of a user. The magnifying lenses 530 and 532 allow the user to see a magnified image by magnifying the light that comes out of the waveguide 510 and travels toward the eyes of the user.

In FIG. 5, when light emitted from the display panel 500 is incident upon the waveguide 510 at a predetermined angle, the first grating 520, which is installed opposite to the display panel 500, at the area of the waveguide where light is first incident, diffracts the incident light down the waveguide 510 in both directions so that the incident light has a total internal reflection angle 2 in the waveguide 510. The total internal reflection angle is calculated by Equation (1):

$$\theta = \sin^{-1}\left(\frac{1}{n}\right)$$

$$\dots (1)$$

wherein the numeral 1 is the refractive index of air and n is the refractive index of the material of the waveguide 510.

The path of light traveling in the waveguide must be shorter than the focal distance f of the magnifying lenses 530 and 532 installed in front of the user's eyes. For instance, if t is the thickness of the waveguide 510, **nxt** must be shorter than the focal distance f. However, the size of the display panel 500 and the focal length and size of the magnifying lenses 530 and 532 must be chosen according to the desired size of a magnified image in consideration of the purpose of the wearable display system (NED). Then, the entire structure of the waveguide is designed and the type and thickness thereof and the number of times reflection occurs are determined based on this consideration. The first grating 520 and the second grating 522, and the first grating 520 and the third grating 524, have a conjugate relationship, respectively. That is, the second and third gratings 522 and 524 diffract incident light at the same predetermined angle at which light is incident on the first grating 520, provided the angle at which light is incident on each of the second and third gratings 522 and 524 is the same as the angle at which light is diffracted by the first grating 520. At that time, the second grating 522 is the same as the third grating 524. In the embodiment relating to FIG. 5, a wearable display system having one display panel and three gratings is described, but the numbers of gratings and display panels are not limited in the present invention.

FIG. 6 shows an example of the conjugate relationship between the gratings described above. The first and second gratings 600 and 610 must have the same grating space d and must be positioned parallel to the waveguide.

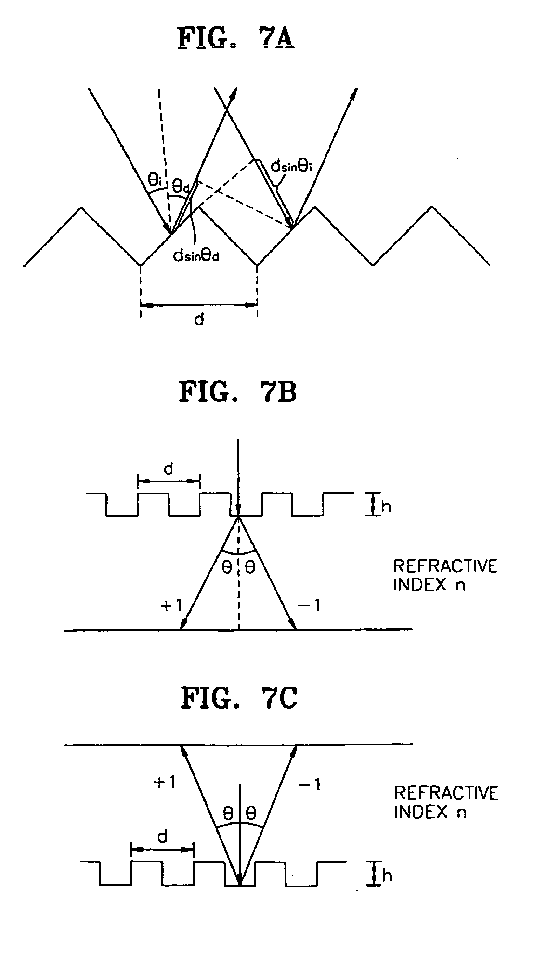

FIG. 7A illustrates an example of the diffraction principle of a grating. Provided that an incidence angle is $\theta_i$, a diffraction angle is $\theta_d$ and a pitch of a grating is d, the following equation (2) is obtained:

$$(\sin\theta_d - \sin\theta_i) = m\frac{\lambda}{d}$$

$$\dots (2)$$

wherein m is diffraction order and $\lambda$ is the wavelength of incident light. A diffraction angle can be controlled by varying the shape and characteristics of a grating. At that time, if light diffracted from a grating propagates into the waveguide, the diffraction angle of light must satisfy the condition of the internal total reflection angle.

FIGS. 7B and 7C illustrate a transmission-type grating and a reflection-type grating, respectively. The transmission-type grating in FIG. 7B bends incident light by θ and transmits it in both directions. For example, light diffracted in the left direction is +1 and light diffracted in the right direction is -1. Sign denotes left/right directions and '1' indicates diffraction order to be '1'. The reflection-type grating in FIG. 7C reflects incident light by θ in both directions.

FIG..8A shows the structure of a wearable display system having a waveguide on which a display panel 802 and first, second and third gratings 804 are positioned opposite to the direction of the eyes of a user. Light emitting from the display panel 802 at a predetermined angle is bent and transmitted in the both directions of the waveguide via the first grating 804, and is incident on the second grating 806 and the third grating 808, which have a conjugate relationship with the first grating 804, at the same incidence angle as the diffraction angle of the first grating 804, respectively. The light incident on the second and third gratings 806 and 808 is reflected at the same angle as the incidence angle on the first grating 804 and heads toward the eyes of the user. Magnifying lenses are installed on the left and right faces of the waveguides 800 where the reflected light reaches, and the user can look at a magnified signal via the magnifying lenses. From this embodiment, it is noted that the first grating 804 is a transmission type and the second and third gratings 806 and 808 are reflection-type.

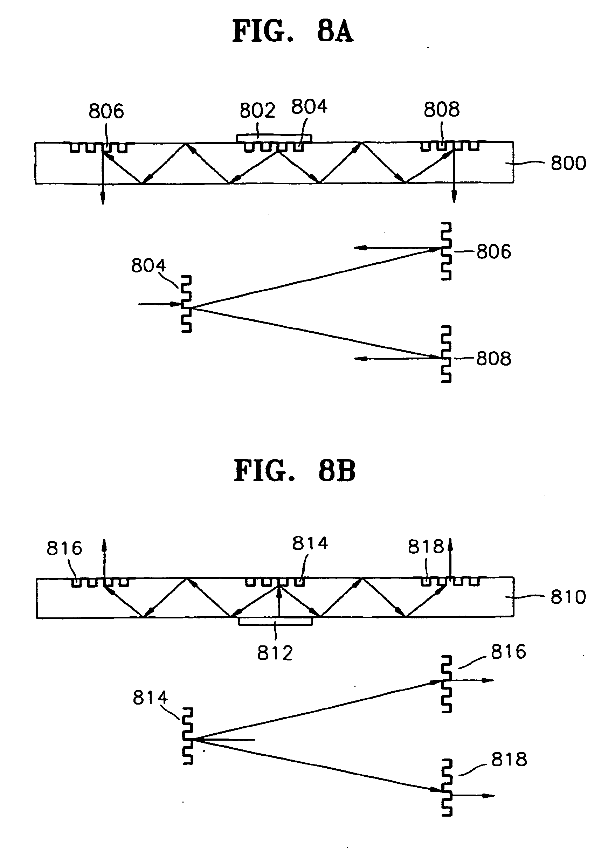

FIG. 8B shows a wearable display system in which the display panel 812 is installed in the opposite direction of the eyes of a user and first, second and third gratings 814, 816 and 818 are disposed on the side of the waveguide through a signal is transmitted to the eyes of the user. Light that is incident on the first grating 814 within the waveguide through the waveguide 810, is reflected in both directions at a predetermined angle. The reflected light propagates in the waveguide 810 and is incident on the second and third gratings 816 and 818, which have a conjugate relationship with the first grating 814, at the same angle as the predetermined angle by which light is diffracted by the first grating 814. The incident light is transmitted by the second and third gratings 816 and 818 at the same angle as a predetermined incidence angle at the first grating 814 and travels toward the eyes of the user. Predetermined magnifying lenses are mounted on the second and third gratings 816 and 818, and magnify a transmitted signal. From this embodiment, the first grating 814 is a reflection type and the second and third gratings 816 and 818 are a transmission type.

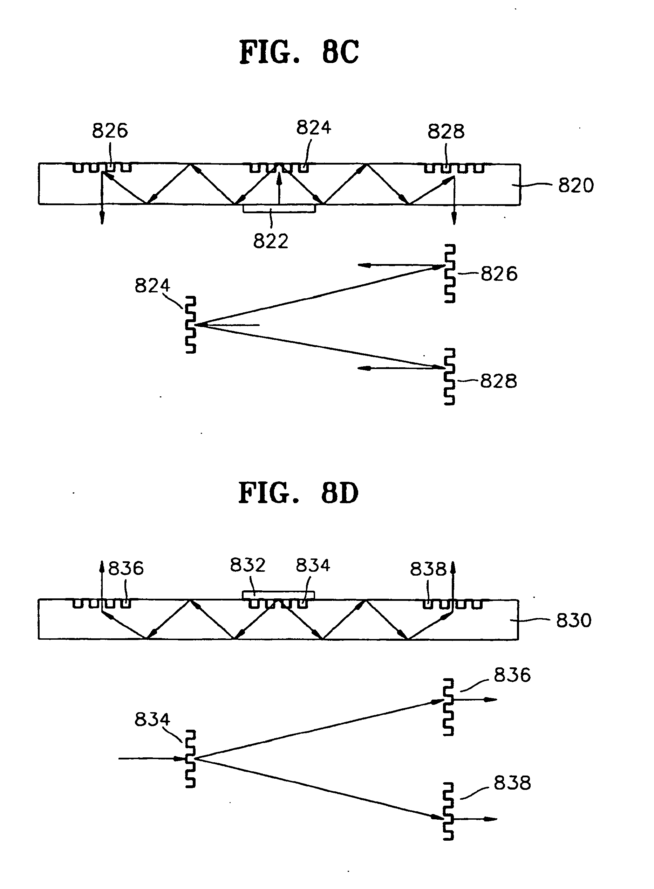

FIG. 8C shows the structure of a wearable display system where a display panel 822 is installed in the direction of the eyes of a user and first, second and third gratings 824, 826 and 828 are installed on the side of the waveguide opposite to the side through which a signal is transmitted to the eyes of the user. Light that is incident upon the first grating 824 from the display panel 822 via the waveguide 820 at a predetermined incidence angle, is reflected at a predetermined reflection angle at the first grating 824 in both directions. The reflected light propagates in the both directions of the waveguide 820 and is incident on the second and third gratings 826 and 828, which have a conjugate relationship with the first grating 824, at the same angle as the reflection angle of the first grating 824. The light incident on the second and third gratings 826 and 828 is reflected at the same angle as the incidence angle at the first grating 824, and propagates toward the eyes of the user. On both faces of the waveguide 820 where the reflected light reaches, magnifying lenses are installed, so that a user can look at a magnified signal. In this embodiment, the first, second and third gratings are all reflection types.

FIG. 8D shows the structure of a wearable display system having a display panel 832 and first, second and third gratings 834, 836 and 838 on a waveguide 830 in the direction of the eyes of a user. The light of a signal, which is incident on the first grating 814 from the display panel 832 at a predetermined incidence angle, is transmitted at a predetermined transmission angle in both directions within the waveguide 830. The transmitted light propagates in the waveguide 830 and then is incident on the second and third gratings 836 and 838, which are conjugates of the first grating 834, at the same angle as the transmission angle at the first grating 834. The incident light is transmitted through the faces of the second and third gratings 836 and 838 at the same angle as the predetermined incidence angle at the first grating 934 and propagates toward the eyes of the user. Magnifying lenses attached to the second and third gratings 836 and 828 magnify a signal to be transmitted. In this embodiment, the first, second and third gratings 834, 836 and 838 are all transmission types.

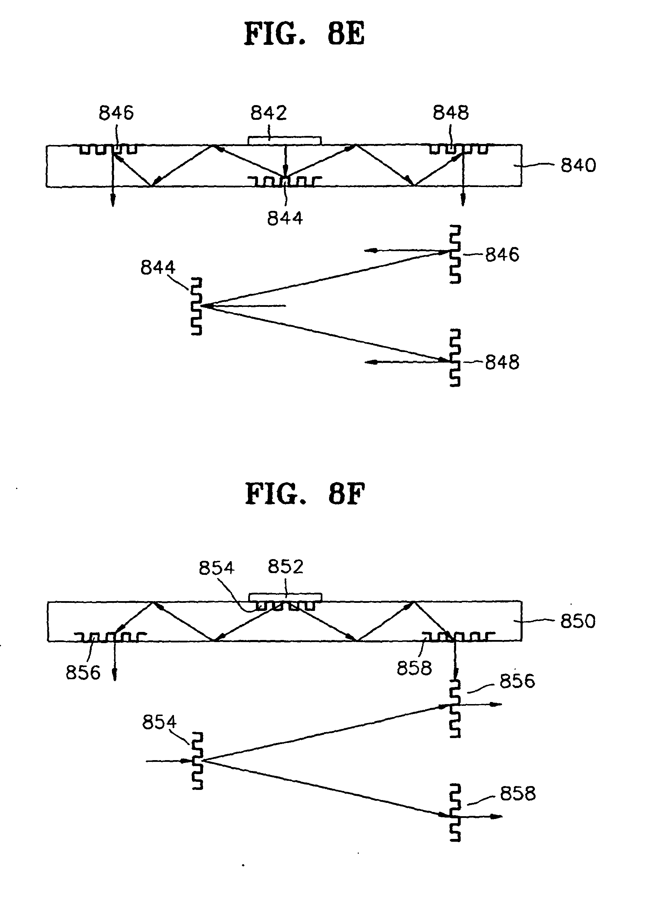

FIG. 8E illustrates the structure of a wearable display system in which a display panel 842 and second and third gratings 846 and 848 are placed in the opposite direction of the eyes of a user and a first grating 844 is positioned on the side of the waveguide through which a signal is transmitted to the eyes of the user. Light, which is generated from the display panel 842 and is incident on the first grating 844 via the waveguide 840 at a predetermined incidence angle, is reflected from the first grating 844 in both directions at a predetermined reflection angle. The reflected light propagates in the left/right directions of the waveguide 840 and then is incident on the second and third gratings 846 and 848, which are conjugates of the first grating 844, at the same angle as the reflection angle at the first grating 844. The incident light is reflected from the second and third gratings 846 and 848 at the same angle as a predetermined incidence angle at the first grating 844, and then propagates toward the eyes of the user. Magnifying lenses attached to both faces of the waveguide 840 where the reflected light reaches, allow a user to look at a magnified signal. In this embodiment, the first, second and third gratings are all reflection types.

FIG. 8F shows a wearable display system in which a display panel 852 and a first grating 854 are placed in the opposite direction of the eyes of a user and second and third gratings 856 and 858 are installed on the side of the waveguide through which a signal is transmitted to the eyes of the user. The light of a signal that is incident upon the first grating 854 from the display panel 852 is transmitted at a predetermined transmission angle in the both directions of the waveguide 850. The transmitted light propagates in the waveguide 850 and then is incident upon the second and third gratings 856 and 858, which are conjugates of the first grating 854, at the same angle as the transmission angle at the first grating 854. The incident light is transmitted through the faces of the second and third gratings 856 and 858 at the same angle as a predetermined incidence angle at the first grating and then propagates toward the eyes of the user. Predetermined magnifying lenses are attached to the second and third gratings 856, 858 and magnify a transmitted signal. In this embodiment, the first, second and third gratings 854, 856 and 858 are all transmission types.

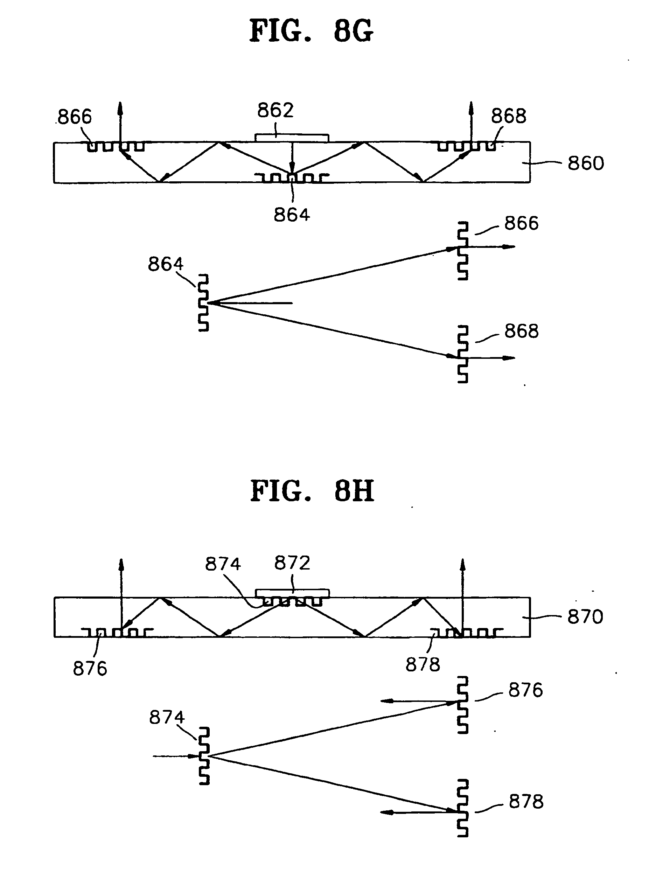

FIG. 8G shows a wearable display system in which a display panel 862 and second and third gratings 866 and 868 are placed in the direction of the eyes of a user, and a first grating 864 is placed on the side of the waveguide opposite to the side through which a signal is transmitted to the eyes of the user. The light emitting from the display panel 862 is incident upon the first grating 864 in the waveguide 860 via the waveguide 860, and reflected at a predetermined angle in the both directions of the waveguide. The reflected light propagates in the waveguide 860 and is incident upon the second and third gratings 866 and 868, which are conjugates of the first grating 864, at the same incidence angle as the reflection angle at the first grating 864. The incident light is transmitted through the second and third gratings 866 and 868 at the same angle as a predetermined incidence angle at the first grating 864, and travels toward the eyes of the user. A predetermined magnifying lens attached to the second and third gratings 866 and 868 magnifies a penetrated signal. In this embodiment, the first grating 864 is a reflection type and the second and third gratings 866 and 868 are transmission types.

FIG. 8H shows a wearable display system in which a display panel 872 and a first grating 874 are placed in the direction of the eyes of the user and second and third gratings 876, 878 are installed on the side of the waveguide opposite to the side through which a signal is transmitted to the eyes of the user. The light emitting from the display panel 872 is incident upon the first grating 874 at a predetermined incidence angle and then transmitted at a predetermined transmission angle in both directions of the waveguide 870 via the first grating 874. The light transmitted in the waveguide 870 propagates in the left and right directions of the waveguide 870 and then is incident upon the second and third gratings 876 and 878, which are conjugates of the first grating 874, at the same angle as the transmission angle at the first grating 874. The light that is incident on the second and third gratings 876 and 878 is reflected at the same angle as the incidence angle at the first grating 874 and propagates toward the eyes of the user. Magnifying lenses are attached to the left and right sides of the waveguide where the reflected light reaches and allows a user to look at a magnified signal. In this embodiment, the first grating 874 is a transmission type and the second and third gratings 854 and 856 are reflection types.

As described above, it is noted that various types of wearable display systems can be realized depending on how a display panel and gratings are arranged on a waveguide. In the embodiment, as shown in FIGS. 8A, 8B, 8E and 8F, it is preferable that a display panel is located on the side of the waveguide opposite to the side through which a signal is transmitted to the eyes of a user.

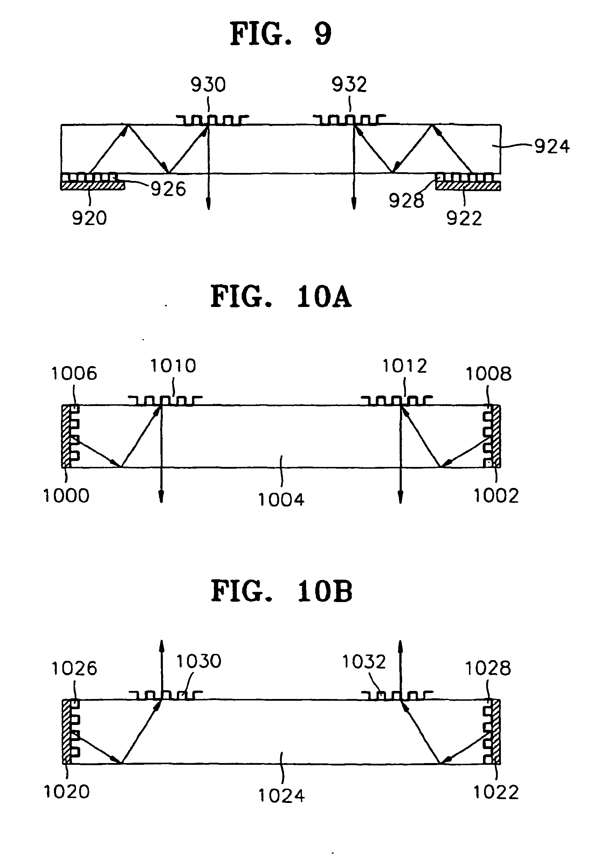

FIG. 9 illustrates another embodiment of a wearable display system according to the present invention adopting two display panels. From the structure of this system, it is noted that display panels 920 and 922 are placed on the lower parts in the left and right directions of a waveguide, not the center thereof. First gratings 926 and 928 are installed parallel to the display panels 920 and 922, respectively. Second gratings 930 and 932, which are conjugates of the first gratings 926 and 928, are placed in the opposite direction of the eyes of a user near the center of the waveguide 924. Light of a signal emitting from the display panels 920 and 922 is transmitted in the waveguide at a predetermined transmission angle via the first gratings 926 and 928, and the transmitted light is incident on the second gratings 930 and 932 at the same angle as the transmission angle. Light, which is incident on the second gratings 930 and 932, is reflected at the same angle as the incidence angle at the first gratings on the waveguide 924, and allows the reflected light to travel toward the eyes of the user. Magnifying lenses (not shown) are placed on the face of the waveguide where the reflected light reaches and magnify an image. In this embodiment, the first gratings 926 and 928 are transmission types and the second gratings 930 and 932 are reflection types. A variety of structures of wearable display systems can be created by different combinations of the constituents included in FIG. 9, as wearable display systems of diverse structures are made by various combinations of the types and locations of gratings and the positions of display panels in FIGS. 8A-8H. FIGS. 8 and 9 show combinations of one or two display panels and a predetermined number of gratings that are adequate for display panels, but the numbers of display panels and gratings can be increased depending on the design. In this case, numerous different structures of wearable display systems can be derived by various combinations the types and positions of gratings and the position of display panels as shown in FIGS. 8A - 8H.

FIG. 10A shows an embodiment of a wearable display system having display panels mounted on the both ends of a waveguide. In this structure, display panels 1000 and 1002 are placed at opposite ends of a waveguide 1004, not on the sides thereof. First gratings 1006 and 1008 are installed parallel to the display panels 1000 and 1002. Second gratings 1010 and 1012, which are in the conjugates of the first gratings, are placed in the opposite direction of the eyes of a user near the center of the waveguide 1004. Light of a signal emitting from the display panels 1006 and 1008 is transmitted into the waveguide 1004 through the first gratings 1006 and 1008, and the transmitted light is incident upon the second gratings 1010 and 1012 at the same angle as the transmission angle. The light which is incident on the second gratings 1010 and 1012 is reflected at the same angle as the incidence angle at the first gratings, and allows the reflected light to head for the eyes of the user. On the surface of the waveguide where the reflected light reaches, magnifying lenses (not shown) are placed to magnify an image. In this embodiment, the first gratings 1006 and 1008 are transmission types and the second gratings 1010 and 1012 are reflection types.

FIG. 10B is another embodiment of the wearable display system illustrated in FIG. 10A, i.e., the structure is the same, but the types of gratings are different. As in FIG. 10A, display panels 1020 and 1022 are positioned at the both sides of a waveguide, not on the sides thereof and first gratings 1026 and 1028 are installed parallel to the display panels 1020 and 1022. Second gratings 1030 and 1032, which are conjugates of the first gratings 1026 and 1028, are placed in the direction of the eyes of a user near the center of the waveguide 1024. Light emitting from the display panels 1020 and 1022 is transmitted into the waveguide 1024 at a predetermined angle by the first gratings 1026 and 1028, and the transmitted light is incident upon the second gratings 1030 and 1032 at the same angle as the transmission angle at the first gratings 1026 and 2028. The light which is incident on the second gratings 1030 and 1032 is transmitted at the same angle as the incidence angle at the first gratings and heads toward the eyes of the user. The transmitted light is magnified by magnifying lenses (not shown) attached to the outer sides of the second gratings 1030 and 1032. In this embodiment, the first gratings 1026 and 1028 and the second gratings 1030 and 1032 are all transmission types.

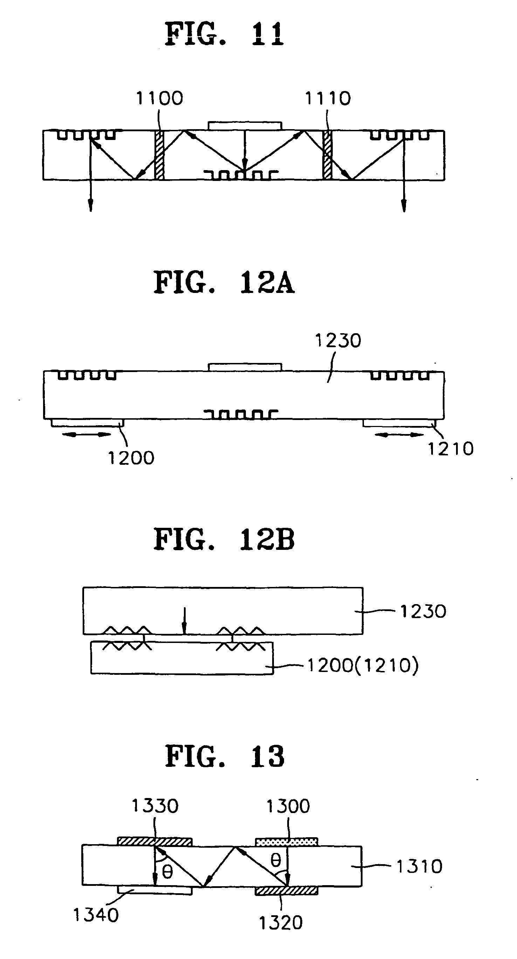

FIG. 11 illustrates a wearable display system according to the present invention, which adopts a shutter to realize a three-dimensional image. The example of FIG. 11 is a realized three-dimensional image example related to FIG. 8E. A shutter can be applied to all the wearable display systems having the structures described above. Shutters 1100 and 1110 for blocking light propagating in both directions of a waveguide are alternately opened and closed at different times so that the same image reaches each eye of a user at a different time, thereby causing an effect that an image looks three-dimensional. Although not shown in FIG. 11, the wearable display system having a shutter on only one side of the right and left sides can produce the same three-dimensional effects.

As describe above, a three-dimensional image is realized when the same image reaches the eyes of a user with a time difference. In the event that media having different refractive indexes are used as left and right waveguides where light propagates, the lattice of left and right gratings is differently spaced, or the number of left and right gratings is differently set, left and right diffraction angles become different from each other so that the propagation distance of light changes. As a result, a time different occurs in the final signal that enters the user's eyes, thereby the three-dimensional image effect can be achieved. When using a waveguide having different media on its right and left sides, second and third gratings must be designed in consideration of the diffraction angle of light incident on the first gratings that are different on right and left sides depending on the type of media of a waveguide. Further, the diffraction angle must be considered in designing gratings when the number of left and right gratings is differently set. At that time, a waveguide media must be selected and gratings must be designed under the assumption that the diffraction angle is made when total internal reflection occurs. Another way to achieve a three-dimensional image is to make the same signal reach the eyes of the user using two display panels with a predetermined time difference.

FIG. 12A shows an example of a wearable display system according to the present invention, which can control an inter-pupillary distance (IPD). The IPD of most adult men and women ranges from 50mm to 74mm. If a user wears a wearable display system is designed differently for a different IPD, the left and right images look different and overlap each other, and as a result, eye fatigue increases compared to when wearing a wearable display system that fits the user's IPD. Thus, in order to adjust IPD to make an image appear clearly, magnifying lenses 1200 and 1210 of a wearable display system can be moved to positions corresponding to the pupils of the eyes.

FIG. 12B illustrates an example of a wearable display system including waveguide 1230 having a saw-toothed part and saw-toothed magnifying lenses 1200 and 1210 that can be combined with or separated from the waveguide 1230, which allows a user to move the magnifying lenses 1200 and 1210 a predetermined distance along the waveguide 1230. Here, the width of the magnifying lenses 1200 and 1210 must be narrower than that of a grating for diffracting a signal, and further, the magnifying lenses 1200 and 1210 must be movable only within a distance the same as the width of a grating.

FIG. 13 is an embodiment of a wearable display system having a monocular structure. The monocular wearable display system employs the same structure and principles as the binocular display system of FIG. 5 except that it allows a user to look at an image with only one eye. The monocular display system comprises a display panel 1300, a waveguide 1310, a first grating 1320, a second grating 1330 and an eyepiece 1340. The display panel 1300 outputs a signal received from a predetermined signal source (not shown) via a wire or radio. The waveguide 1310 allows a signal emitted from the display panel 1300 to propagate in one direction. The first and second gratings 1320 and 1330 diffract a signal passing through the waveguide 1310 and finally allow the signal to head toward the eyes of the user. Here, the first grating 1320 and the second grating 1330 are conjugates as described above, which means that when light incident on the first grating 1320 at a predetermined incidence angle is diffracted at a predetermined angle, the light propagates through the waveguide 1310, is incident on the second grating 1322 at the same angle as the diffraction angle at the first grating 1320, and is diffracted at the same angle as the predetermined angle of incidence at the first grating 1320. The magnifying lens 1340 magnifies a signal that emits from the waveguide 1310 so that the image appears larger to the user.

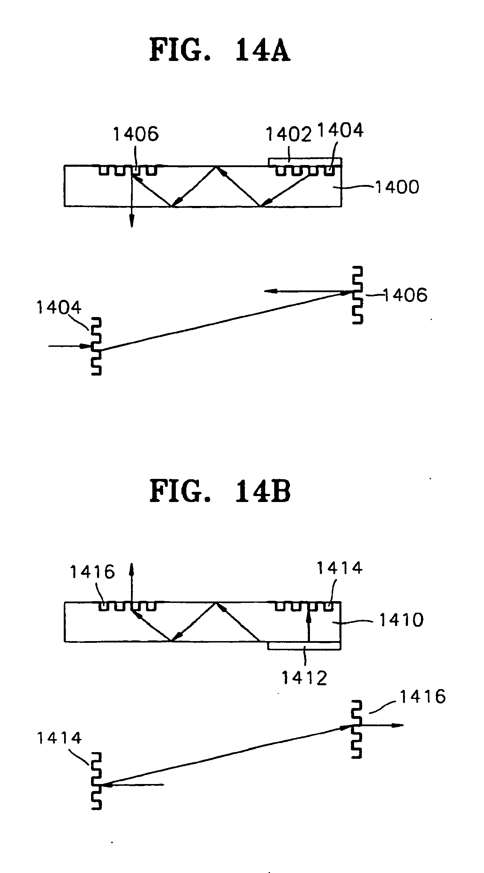

FIGS. 14A-14H illustrate various possible embodiments of a monocular wearable display system depending on the type of a grating and arrangement thereof on a waveguide.

FIG. 14A shows the structure of a monocular wearable display system in which a display panel 1402 and first and second gratings 1404 and 1406 are placed on a waveguide 1400 in the opposite direction of the eye of a user. Light emitting from the display panel is incident on the first grating 1402 at a predetermined angle and then is transmitted in the left direction within the waveguide via the first grating 1404 and then is incident on the second grating 1406, which is the conjugate of the first grating 1404, at the same angle as the transmission angle at the first grating 1404. Light incident on the second grating 1406 is reflected at the same angle as the incidence angle at the first grating 1404 and heads toward the eye of a user. On the surface of the waveguide 1400 where light reaches, a magnifying lens is installed and allows a user to look at a magnified signal. In this embodiment, the first grating 1404 is a transmission type and the second grating 1406 is a reflection type.

FIG. 14B shows a monocular wearable display system where a display panel 1412 is placed in the opposite direction of the eye of a user and first and second gratings 1414 and 1416 are installed on the side of a waveguide 1410 through which a signal is transmitted to the eye of the user. Light incident on the first grating 1414 in the waveguide 1410 at a predetermined incidence angle is reflected toward the left direction of the waveguide at a predetermined reflection angle. The reflected light propagates in the waveguide 1410 and is incident on the second grating 1416, which is the conjugate of the first grating 1414, at the same angle as the reflection angle at the first grating 1414. The incident light is transmitted out of the second grating 1416 at the same angle as the predetermined incidence angle at the first grating and heads toward the eye of the user. A predetermined magnifying lens is attached to the second grating 1416 and magnifies a signal to be transmitted. In this embodiment, the first grating 1414 is a reflection type and the second grating 1416 is a transmission type.

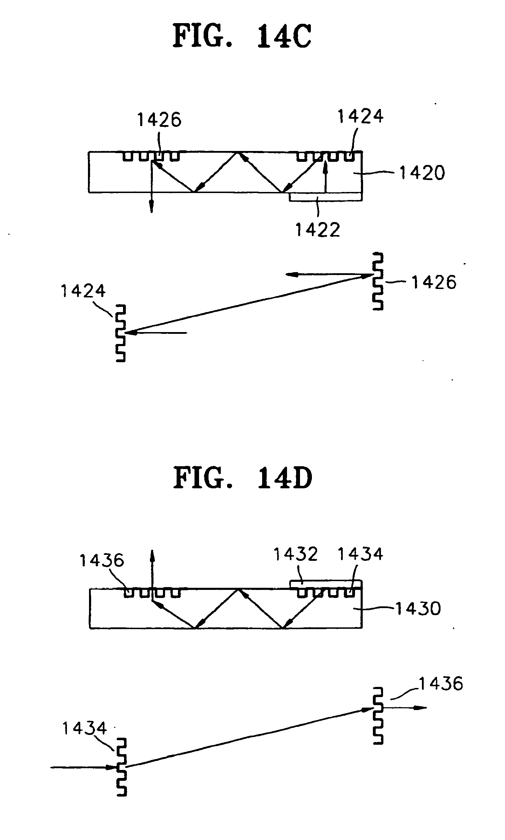

FIG. 14C shows a monocular wearable display system where a display panel 1422 is placed in the direction of the eye of a user and first and second gratings 1424 and 1426 are installed on the side of a waveguide 1420 opposite to the side through which a signal is transmitted to the eye of the user. Light, which emits from the display panel 1422 and is incident on the first grating 1424 at a predetermined incidence angle via the waveguide 1420, is reflected at a predetermined reflection angle in the left direction of the waveguide 1420. The reflected light propagates in the left direction of the waveguide 1420 and then is incident on the second grating 1426, which is the conjugate of the first grating 1424, at the same angle as the reflection angle at the first grating 1424. Light incident on the second grating 1426 is reflected and propagates toward the eye of the user at the same angle as the incidence angle at the first grating 1424. A magnifying lens is attached to the surface of the waveguide 1420 and allows the user to view a magnified signal. In this embodiment, the first and second gratings 1424 and 1426 are all reflection types.

FIG. 14D shows the structure of a monocular wearable display system where a display panel 1432, first and second gratings 1434 and 1436 are installed on the side of a waveguide 1430 through which a signal is transmitted to the eye of a user. Light of a signal, which is emitted from the display panel 1432 and is incident on the first grating 1434 at a predetermined incidence angle, is transmitted at a predetermined transmission angle toward the left direction within the waveguide 1430. The transmitted light propagates in the waveguide 1430 and is incident on the second grating 1436, which is the conjugate of the first grating 1434, at the same angle as the transmission angle at the first grating 1434. The incident light is transmitted through the second grating 1436 at the same angle as a predetermined incidence angle at the first grating 1434 and propagates toward the eye of the user. A magnifying lens is attached to the second grating 1436 and magnifies a signal to be transmitted. In this embodiment, the first and second gratings 1434 and 1436 are all transmission types.

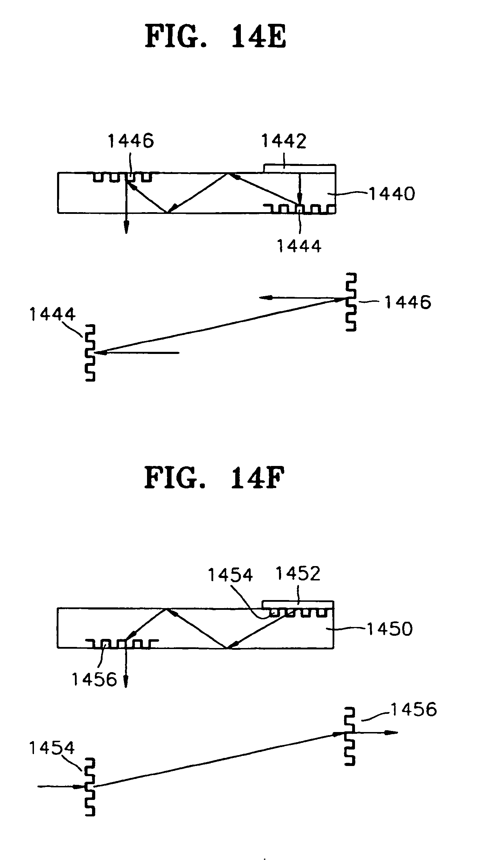

FIG. 14E shows the structure of a monocular wearable display system where a display panel 1442 and a second grating 1446 are placed in the opposite direction of the eye of a user and a first grating 1444 is installed on the side of the waveguide 1440 through which a signal is transmitted to the eye of the user. Light, which emits from the display panel 1442 and is incident on the first grating 1444 at a predetermined incidence angle via the waveguide 1440, is reflected toward the left direction at a predetermined reflection angle by the first grating 1444. The reflected light propagates in the left direction of the waveguide 1440 and is incident on the second grating 1446, which is the conjugate of the first grating 1444, at the same angle as the reflection angle at the first grating 1444. The incident light is reflected by the second grating 1446 at the same angle as the predetermined incidence angle at the first grating 1444 and propagates toward the eye of the user. A magnifying lens is attached to the face of the waveguide 1440 and allows the user to view a magnified signal. In this embodiment, the first and second gratings 1444 and 1446 are all reflection types.

FIG. 14F shows the structure of a monocular wearable display system where a display panel 1452 and a first grating 1454 are placed in the opposite direction of the eye of a user and a second grating 1456 is installed on the side of a waveguide 1450 through which a signal is transmitted to the eye of a user. Light of a signal, which is incident on the first grating 1454 from the display panel 1452 at a predetermined incidence angle, is transmitted toward the left direction within the waveguide 1450 at a predetermined transmission angle. The transmitted light propagates in the waveguide 1450 and is incident on the second grating 1456, which is the conjugate of the first grating 1454, at the same angle as the transmission angle at the first grating 1454. The incident light is transmitted through the second grating 1456 at the same angle as the predetermined incidence angle at the first grating 1454 and propagates toward the eye of the user. A magnifying lens is attached to the second grating 1456 and magnifies a signal to be transmitted. In this embodiment, the first and second gratings 1454 and 1456 are all transmission types.

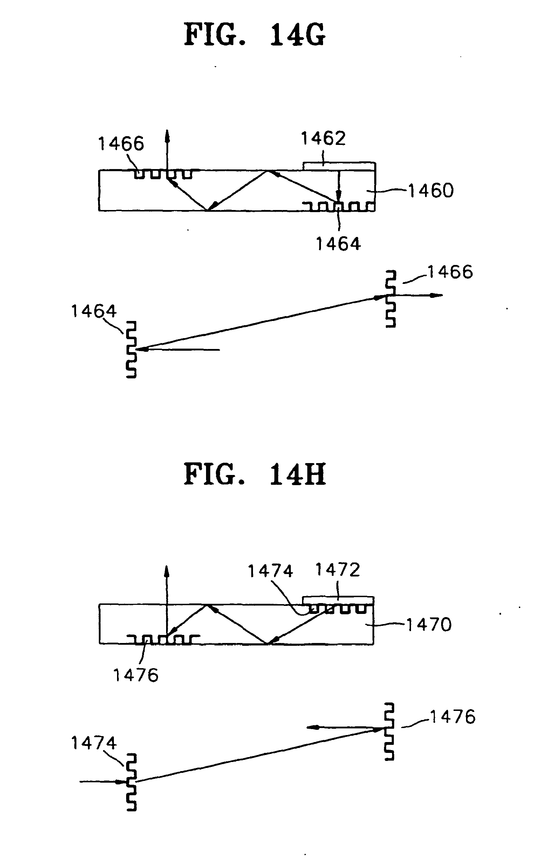

FIG. 14G shows the structure of a monocular wearable display system where a display panel 1462 and a second grating 1466 are placed on the side of a waveguide 1460 opposite to the side through which a signal is transmitted to the eye of a user and a first granting 1464. Light which is incident on the first grating 1464 within the waveguide 1460 at a predetermined incidence angle via the waveguide 1460, is reflected toward the left direction at a predetermined reflection angle. The reflected light propagates in the waveguide 1460 and then is incident on the second grating 1466, which is the conjugate of the first grating 1464, at the same angle as the reflection angle at the first grating 1464. The incident light is transmitted through the second grating 1466 at the same angle as the predetermined incidence angle at the first grating 1464 and travels toward the eye of the user. A magnifying lens is attached to the second grating 1466 and magnifies a signal to be transmitted. In this embodiment, the first grating 1464 is a reflection type and the second grating 1466 is a transmission type.

FIG. 14H shows the structure of a monocular wearable display system where a display panel 1472 and a first grating 1474 are placed in the direction of the eye of a user and a second grating 1476 is installed on the side of a waveguide 1470 through which a signal is transmitted to the eye of the user. Light emitted from the display panel 1472 at a predetermined incidence angle is transmitted in the right and left directions within the waveguide 1470 at a predetermined transmission angle via the first grating 1474. Light transmitted into the waveguide 1470 propagates in the left direction of the waveguide 1460 and then is incident on the second grating 1476, which is the conjugate of the first grating 1474, at the same angle as the transmission angle at the first grating 1474. Light incident on the second grating 1476 is reflected at the same angle as the incidence angle at the first grating 1474 and propagates toward the eye of the user. A magnifying lens is attached to the surface of the waveguide 1470 and allows a user to view a magnified signal. In this embodiment, the first grating 1474 is a transmission type and the second 1466 is a reflection type.

As described above, it is noted that a variety of monocular wearable display systems can be realized depending on the arrangement of a display panel and gratings on a waveguide. Accordingly, it is possible to derive other embodiments that have the same structure as the above-described embodiments, but the propagation direction of light is different, i.e. light propagates in the right direction.

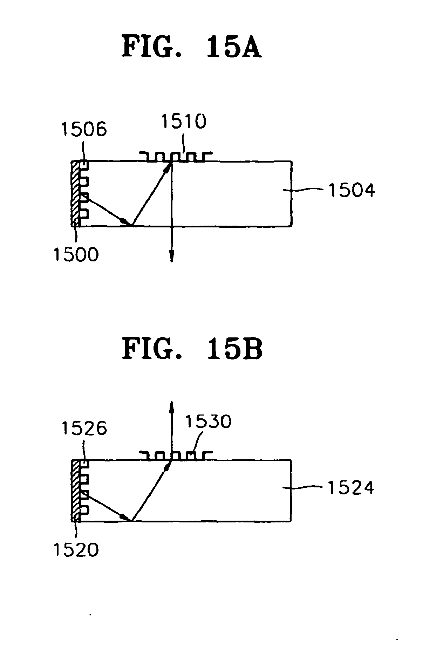

FIG. 15A is another embodiment of a monocular wearable display system. In this embodiment, a display panel 1500 is placed on the end of a waveguide 1504 and a first grating 1506 is located parallel to the display panel 1500. A second grating 1508, which is the conjugate of the first grating 1506, is positioned in the opposite direction of the eye of a user at the center of the waveguide 1504. Light of a signal which emits from the display panel 1500 is incident on the first grating 1506 at a predetermined incidence angle and then is transmitted into the waveguide 1504 at a predetermined transmission angle via the first grating 1506. The transmitted light is then incident on the second grating 1510 at the same angle as the transmission angle. Light incident on the second grating 1510 is reflected at the same angle with respect to the second grating 1510 as the incidence angle at the first grating 1506 and propagates toward the eye of the user. A magnifying lens (not shown) like an eyepiece is attached to the surface of the waveguide 1504 where the reflected light arrives and magnifies the signal. In this embodiment, the first grating 1506 is a transmission type and the second grating1508 is a reflection type.

FIG. 15B is still another embodiment of a monocular wearable display system that has the same structure as that of FIG. 15A, but adopts different types of gratings. Also, in this embodiment, a display panel 1520 is placed on the end of a waveguide 1524 and a first grating 1526 is located parallel to the display panel 1520. A second grating 1530, which is the conjugate of the first grating 1526, is placed in the direction of the eye of the user at the center of the waveguide 1524. Light of a signal which is emitted from the display panel 1520 is incident on the first grating 1526 at a predetermined incidence angle, and then is transmitted into the waveguide 1524 at a predetermined transmission angle via the first grating 1526, and the transmitted light is incident on the second grating 1530 at the same angle as the transmission angle. Light incident on the second grating 1530 is reflected at the same angle with respect to the second grating 1550 at the incidence angle at the first grating 1526 and travels toward the eye of the user. A magnifying lens (not shown) is attached to the surface of the waveguide 1524 where the reflected light arrives and magnifies the signal. In this embodiment, the first and second gratings 1526 and 1530 are transmission types.

In FIGS. 15A and 15B, a display panel is positioned at the left end of a waveguide. However, the position of a display panel can vary according to design. In this case, a first grating need not necessarily be placed at the same end of a waveguide where a display is placed.

A three-dimensional image can be realized by wearing the above-described two monocular wearable display systems at the same time, one on each eye, thereby the same signal is displayed with a time difference on the two monocular wearable display systems and thus a three-dimensional image can be achieved.

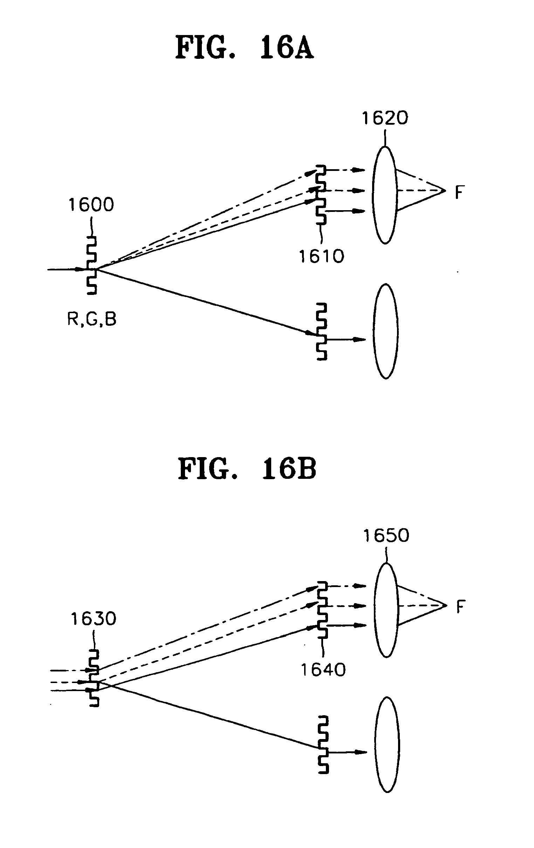

FIGS. 16A and 16B illustrate the removal of chromatic aberration by the gratings used in the present invention. Chromatic aberration occurs when the focuses of the R, G and B components of an incident color signal are not converged on one spot, that is, different color images are formed at different places. In the event that a color signal propagates via the gratings used in the present invention, different colors can be focused at one place by combining gratings having a conjugate relationship.

Referring to FIG. 16A, a first grating 1600 and a second grating 1610 are both transmission types and R, G and B color components of an incident signal are transmitted through the first grating 1600 at different transmission angles. Each of the transmitted color components is incident on the second grating 1610 at the same angle as the transmission angle at the first grating 1600, is transmitted through the second grating 1610 at the same incidence angle as that at the first grating and then is incident in parallel with the others on a magnifying lens 1620 such as an eyepiece. Each of the color components that reach the magnifying lens 1620 in parallel is focused with the same focal distance via the magnifying lens 1620 thereby removing chromatic aberration.

FIG. 16B shows R, G and B components of an incident signal incident on a first grating 1630 at a predetermined angle, in the case of first and second transmission-type gratings 1630 and 1640. The R, G and B components which are incident on the first grating 1630 at a predetermined angle propagate at different transmission angles and are incident on the second grating 1640 at the same angle as the transmission angle. Each of the incident color components passes through the second grating 1640 at the same angle as the predetermined incidence angle at the first grating 1630 and then is incident on a magnifying lens 1650 such as an eyepiece in parallel. The magnifying lens 1650 allows the color components that are incident in parallel to be focused at the same focal distance thereby removing chromatic aberration. The removal of chromatic aberration is obtained by the above-described gratings having a conjugate relationship.

The above-mentioned wearable display system can be achieved by incorporating a waveguide and gratings, or a waveguide and an eyepiece, or a waveguide and gratings and an eyepiece into one single-body.

The above-described waveguide is made of glass or plastic or particularly, acryl substance (PMMA).

The magnifying lens can be manufactured from a holographic optical element (HOE) or a diffraction optical element (DOE). A diffraction lens, a refractive lens, a combination of a diffraction lens and a refractive lens, or aspherics is used as the magnifying lens.

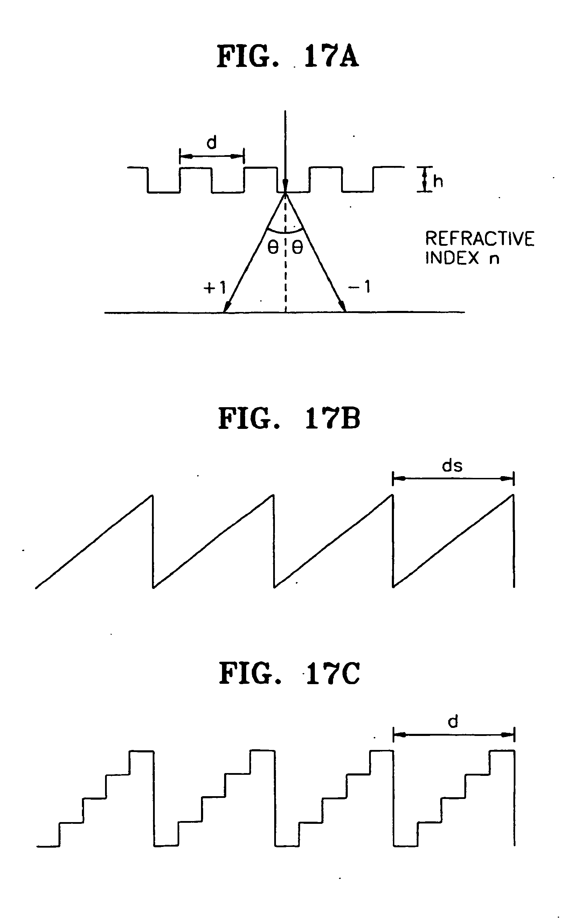

FIGS. 17A to 17C illustrate the types of gratings that can be used in the present invention. FIG. 17A shows a rectangular binary grating for diffracting light in both directions. FIGS. 17B shows a brazing-type grating that is saw-toothed and diffracts light only in one direction. FIG. 17C shows a grating that is multi-layered and is designed to enhance the efficiency of diffraction. In addition to these types, a hologram grating can be adopted. These gratings can be manufactured from an HOE or a DOE.

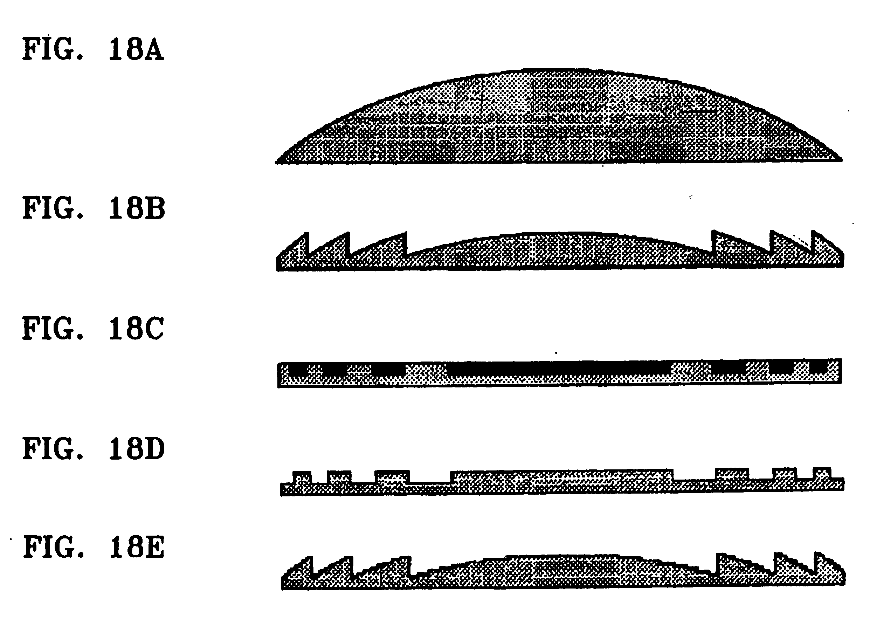

FIGS. 18A to 18E illustrate a variety of eyepieces.

According to the above-described present invention, a more light weight and compact wearable display system can be realized by minimizing the number of optical components, and the complexity and cost in manufacturing a display system can be reduced. In addition, a display system can be produced on a large scale by incorporating a waveguide, gratings and an eyepiece into one single body, and further, chromatic aberration can be removed by conjugate gratings.

**The following is a list of further preferred embodiments of the invention:**

Embodiment 1: A wearable display system having at least one display panel for outputting at least one signal processed in a predetermined way, comprising:

at least one waveguide for guiding the propagation of the at least one signal output from the at least one display panel;
a plurality of gratings for diffracting the at least one signal propagating through the at least one waveguide: and
at least one magnifying lens for magnifying the at least one signal diffracted by at least one of the gratings.

Embodiment 2: The system according to embodiment 1, wherein the plurality of gratings comprises:

at least one first grating for diffracting the at least one signal output from the at least one display panel so that the at least one signal propagates through the at least one waveguide; and
at least one second grating for diffracting the at least one signal propagating through the at least one waveguide after being diffracted by the at least one first grating.

Embodiment 3: The system according to embodiment 1, wherein the plurality of gratings comprises:

at least one first grating for reflecting the at least one signal output from the at least one display panel and incident on the at least one first grating at a predetermined incidence angle, at a predetermined reflection angle; and
at least one second grating for reflecting or transmitting the at least one signal propagating through the at least one waveguide and incident upon the at least one second grating at the same angle as the predetermined reflection angle at the at least one first grating, at the same angle as the predetermined incidence angle at the at least one first grating.

Embodiment 4: The system according to embodiment 1, wherein the plurality of gratings comprises:

at least one first grating for transmitting the at least one signal output from the at least one display panel and incident on the at least one first grating at a predetermined incidence angle, at a predetermined transmission angle; and
at least one second grating for transmitting or reflecting the at least one signal propagating through the at least one waveguide and incident upon the at least one second grating at the same angle as the predetermined transmission angle at the at least one first grating, at the same angle as the predetermined incidence angle at the at least one first grating.

Embodiment 5: The system according to one of the embodiments 1 to 4, further comprising at least one shutter for alternately blocking at least one signal in the waveguide to produce a three-dimensional image.

Embodiment 6: The system according to one of the embodiments 1 to 5, wherein the at least one magnifying lens is movable along a predetermined length of the at least one waveguide.

Embodiment 7: The system according to embodiment 1, the system having a binocular structure and comprising:

one waveguide through which a signal propagates;
one display panel placed at the center of the waveguide, the display panel for outputting the signal;
a first grating for diffracting the signal output from the display panel and incident upon the first grating at a predetermined incidence angle, in both the left and right directions of the waveguide at a predetermined diffraction angle; second gratings for diffracting the signal, which is diffracted by the first grating in both the left and right directions of the waveguide to propagate through the waveguide and be incident upon the second gratings at the same angle as the predetermined diffraction angle at the first grating, at the same angle as the predetermined incidence angle at the first grating; and
a plurality of magnifying lenses for magnifying the signal diffracted by the second gratings.

Embodiment 8: The system according to embodiment 7, wherein the first grating is adjacent to the display panel and is a transmission type for transmitting the signal output from the display panel and incident upon the first grating at a predetermined incidence angle, in the left and right directions within the waveguide at a predetermined transmission angle.

Embodiment 9: The system according to embodiment 8, wherein each of the second gratings is:

a reflection type for reflecting the signal propagating through the waveguide and incident upon the second gratings at the same angle as the predetermined transmission angle at the first grating, at the same angle as the predetermined incidence angle at the first grating; or
a transmission type for transmitting the signal propagating through the waveguide and incident upon the second grating at the same angle as the predetermined transmission angle at the first grating, at the same angle as the predetermined incidence angle at the first grating.

Embodiment 10: The system according to embodiment 8, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

Embodiment 11: The system according to embodiment 7, wherein the first grating is positioned opposite to the display panel in the waveguide and is a reflection type for reflecting a signal output from the display panel and incident upon the first grating at a predetermined incidence angle, at a predetermined reflection angle both in the left and right directions within the waveguide.

Embodiment 12: The system according to embodiment 11, wherein each of the second gratings is:

a transmission type for transmitting the signal propagating through the waveguide and incident upon the second grating at the same angle as the predetermined reflection angle at the first grating, at the same angle as the predetermined incidence angle at the first grating; or
a reflection type for reflecting the signal propagating through the waveguide and incident upon the second grating at the same angle as the predetermined reflection angle at the first grating, at the same angle as the predetermined incidence angle at the first grating.

Embodiment 13: The system according to embodiment 11, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

Embodiment 14: The system according to one of the embodiments 7 to 13, further comprising at least one shutter for alternately blocking the signal within the waveguide to produce a three-dimensional image.

Embodiment 15: The system according to one of the embodiments 7 to 14, wherein each of the magnifying lenses is movable along a predetermined length of the waveguide.

Embodiment 16: The system according to embodiment 1, the system having a binocular structure and comprising:

one waveguide through which signals propagate;
two display panels respectively placed on the left and right sides of the waveguide, each of the display panels for outputting a signal;
two first gratings for diffracting the signals output from the display panels and incident upon the first gratings at a predetermined incidence angle, at a predetermined diffraction angle in the left and right directions in the waveguide;
second gratings for diffracting the signals propagating through the waveguide and incident upon the second gratings at the same angle as a predetermined diffraction angle at the first gratings, at the same angle as the predetermined incidence angle at the first gratings; and

a plurality of magnifying lenses for magnifying the signals diffracted by the second gratings.

Embodiment 17: The system according to embodiment 16, wherein each of the first gratings is located adjacent to a respective display panel, and is a transmission type for transmitting the signal output from the respective display panel and incident upon the first grating at a predetermined incidence angle, at a predetermined transmission angle either in the left or right direction in the waveguide.

Embodiment 18: The system according to embodiment 17, wherein each of the second gratings is:

a reflection type for reflecting the signal propagating through the waveguide and incident upon the second grating at the same angle as the predetermined transmission angle at the first gratings, at the same angle as the predetermined incidence angle at the first grating; or

a transmission type for transmitting the signal propagating through the waveguide and incident upon the second grating at the same angle as the predetermined transmission angle at the first grating, at the same angle as the predetermined incidence angle at the first grating.

Embodiment 19: The system according to embodiment 17, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

Embodiment 20: The system according to embodiment 16, wherein each of the first gratings is positioned opposite to each of the display panels in the waveguide and is a reflection type for reflecting a signal output from the display panel and incident upon the first grating at a predetermined incidence angle, at a predetermined reflection angle either in the left or right direction within the waveguide.

Embodiment 21: The system according to embodiment 20, wherein each of the second gratings is:

a reflection type for reflecting the signal propagating through the waveguide and incident upon the second grating at the same angle as the predetermined reflection angle at the first grating, at the same angle as the predetermined incidence angle at the first grating; or

a transmission type for transmitting the signal propagating through the waveguide and incident upon the second grating at the same angle as the predetermined reflection angle at the first grating, at the same angle as the predetermined incidence angle at the first grating.

Embodiment 22: The system according to embodiment 20, wherein one of the second gratings is a transmission type for transmitting the signal propagating through the waveguide and incident upon said one second grating at the same angle as the predetermined reflection angle at the first grating, at the same angle as the predetermined incidence angle at the first grating, while another of the second gratings is a reflection type for reflecting the signal propagating through the waveguide and incident upon said another second grating at the same angle as the predetermined reflection angle at the first gratings, at the same angle as the predetermined incidence angle at the first grating.

Embodiment 23: The system according to embodiment 16, wherein one of the first gratings is located adjacent to one of the display panels and is a transmission type for transmitting a signal output from said one display panel and incident upon said one first grating at a predetermined incidence angle, at a predetermined transmission angle , while another of the first gratings is placed on the opposite side to another one of the display panels and is a reflection type for reflecting a signal output from said another display panel and incident upon said another first grating at a predetermined incidence angle, at a predetermined reflection angle.

Embodiment 24: The system according to embodiment 23, wherein

each of the second gratings is a transmission type; or

each of the second gratings is a reflection type; or

said one second grating is a transmission type, while said another second grating is a reflection type.

Embodiment 25: The system according to one of the embodiments 16 to 24, further comprising at least one shutter for alternately blocking the signal in the waveguide to produce a three-dimensional image.

Embodiment 26: The system according to one of the embodiments 16 to 24, wherein each of the magnifying lenses is movable along a predetermined length of the waveguide.

Embodiment 27: The system according to embodiment 1, the system having a monocular structure and comprising:

one waveguide through which a signal propagates;
one display panel placed on the waveguide, the display panel for outputting the signal;
a first grating for diffracting the signal output from the display panel and incident upon the first grating at a predetermined incidence angle, at a predetermined diffraction angle either in the left or right direction in the waveguide;
a second grating for diffracting the signal propagating through the waveguide and incident upon the second grating at the same angle as the predetermined diffraction angle at the first grating, at the same angle as the predetermined incidence angle at the first grating; and
one magnifying lens for magnifying the signal diffracted by the second grating.

Embodiment 28: The system according to embodiment 27, wherein the second grating is placed:

on the same surface of the waveguide as the first grating; or
on the opposite side of the waveguide as the first grating.

Embodiment 29: The system according to embodiment 27, wherein the first grating is located adjacent to the display panel, the first grating is a transmission type for transmitting the signal output from the display panel and incident upon the first grating at a predetermined incidence angle, either in the left or right direction within the waveguide at a predetermined transmission angle.
Embodiment 30: The system according to embodiment 29, wherein the second grating is:

a reflection type for reflecting the signal propagating through the waveguide and incident upon the second grating at the same angle as the predetermined transmission angle at the first grating, at the same angle as the predetermined incidence angle at the first grating; or
a transmission type for transmitting the signal propagating through the waveguide and incident upon the second grating at the same angle as the predetermined transmission angle at the first grating, at the same angle as the predetermined incidence angle at the first grating.

Embodiment 31: The system according to embodiment 27, wherein the first grating is positioned opposite to the display panel in the waveguide and is a reflection type for reflecting a signal output from the display panel and incident upon the first grating at a predetermined incidence angle, at a predetermined reflection angle either in the left or right direction within the waveguide.
Embodiment 32: The system according to embodiment 31, wherein the second grating is:

a transmission type for transmitting a signal propagating through the waveguide and incident upon the second grating at the same angle as the predetermined reflection angle at the first grating, at the same angle as the predetermined incidence angle at the first grating; or
a reflection type for reflecting the signal propagating through the waveguide and incident upon the second grating at the same angle as the predetermined reflection angle at the first grating, at the same angle as the predetermined incidence angle at the first grating.

Embodiment 33: The system according to embodiment 1, further comprising two first gratings located adjacent to the display panels, respectively for transmitting the signals emitted from the display panels and incident on the first gratings at a predetermined incidence angle, into the waveguide at a predetermined transmission angle, the system having a binocular structure and comprising:

one waveguide through which signals propagate;
two display panels respectively placed on both ends of the waveguide, the display panels for outputting the signals;
second gratings oriented perpendicular to the first gratings of the waveguide, said second gratings being comprised in the plurality of gratings for diffracting the signals propagating through the waveguide and incident upon the second gratings at the same angle as the predetermined transmission angle at the first gratings, at the same angle as the predetermined incidence angle at the first grating; and
a plurality of magnifying lenses for magnifying the signals diffracted by the second gratings.

Embodiment 34: The system according to embodiment 33, wherein each of the second gratings is:

a reflection type for reflecting the incident signal at the same angle as the predetermined incidence angle at the first gratings; or
a transmission type for transmitting the incident signal at the predetermined incidence angle at the first gratings.

Embodiment 35: The system according to embodiment 33, wherein the display panels may display the signals with a time difference with each other to produce a three-dimensional image.

Embodiment 36: The system according to one of the embodiments 33 to 35, further comprising at least one shutter for alternately blocking one of the signals within the waveguide to produce a three-dimensional image is achieved.

Embodiment 37: The system according to one of the embodiments 33 to 36, wherein the magnifying lenses are movable along a predetermined length of the waveguide.

Embodiment 38: The system according to embodiment 1, the system having a monocular structure and comprising:

one waveguide through which a signal propagates;
one display panel placed either on the left or right end of the waveguide, the display panel for outputting the signal;
a first grating for diffracting the signal output from the display panel and incident upon the first grating at a predetermined incidence angle into the waveguide at a predetermined diffraction angle;
a second grating oriented perpendicular to the first grating in the waveguide, the second grating for diffracting the signal propagating through the waveguide and incident upon the second grating at the same angle as the predetermined diffraction angle at the first grating, at the same angle as the predetermined incidence angle at the first grating; and
one magnifying lens for magnifying the signal diffracted by the second grating.

Embodiment 39: The system according to embodiment 38, wherein the first grating is positioned opposite to the display panel in the waveguide and is a reflection type for reflecting a signal output from the display panel and incident upon the first grating at a predetermined incidence angle, at a predetermined reflection angle within the waveguide.

Embodiment 40: The system according to embodiment 39, wherein the second grating is a transmission type for transmitting the signal propagating through the waveguide and incident upon the second grating at the same angle as the predetermined reflection angle at the first grating, at the same angle as the predetermined incidence angle at the first grating.

Embodiment 41: The system according to embodiment 38, wherein the first grating is adjacent to the display panel, the first grating is a transmission type for transmitting the signal output from the display panel and incident upon the first grating at a predetermined incidence angle, within the waveguide at a predetermined transmission angle.

Embodiment 42: The system according to embodiment 41, wherein the second grating is:

a transmission type for transmitting the signal propagating through the waveguide and incident upon the second grating at the same angle as the predetermined transmission angle at the first grating, at the same angle as the predetermined incidence angle at the first grating; or
a reflection type for reflecting the signal propagating through the waveguide after being transmitted by the first grating and incident upon the second grating at the same angle as the predetermined transmission angle at the first grating, at the same angle as the predetermined incidence angle at the first grating.

Embodiment 43: The system according to embodiment 1, wherein the signal propagates to the left and right eyes of a user with a time difference, thereby producing a three-dimensional image.

Embodiment 44: The system according to embodiment 1 wherein the plurality of gratings comprises:

at least one first grating for diffracting the at least one signal propagating through the at least one waveguide;
at least one second grating for diffracting the at least one signal propagating through the waveguide and then incident upon the at least one second grating, toward the eyes of a user; and
wherein the at least one magnifying lens is adapted for magnifying the at least one signal diffracted by the at least one second grating.

### Important Note:

While the attached claims relate to a preferred aspect of the present invention, the applicant wishes to reserve the right to file one or several further divisional applications at a later point in time for other aspects disclosed in the application. Those further applications will be divided out from the present divisional application. By this statement, the public is herewith informed that more divisional applications relating to different subject matter may follow.

**Claims**

1. A wearable display system having a binocular structure, wherein the system comprises:

   one display panel (500) for outputting at least one signal processed in a predetermined way;
   one waveguide (510) for guiding the propagation of the at least one signal output from the display panel (500);
   a plurality of gratings (520, 522, 524) for diffracting the at least one signal propagating through the waveguide (510);
   magnifying lenses (530, 532) for magnifying the at least one signal diffracted by at least one of the gratings; and
   a first and a second shutter (1100, 1110) arranged for alternately blocking and opening a wavepath within the waveguide to create a three-dimensional image,

   wherein the display panel (500) is placed at the center of the waveguide, wherein the plurality of gratings comprises:

   a first grating (520) for diffracting the signal output from the display panel and incident upon the first grating at a predetermined incidence angle, in both the left and right directions of the waveguide at a predetermined diffraction angle; and
   second gratings (522, 524) for diffracting the signal, which is diffracted by the first grating in both the left and right directions of the waveguide to propagate through the waveguide and be incident upon the second gratings at the same angle as the predetermined diffraction angle at the first grating, at the same angle as the predetermined incidence angle at the first grating,

   wherein said magnifying lenses (530, 532) are arranged for magnifying the signal diffracted by the second gratings.

2. The system according to claim 1, wherein the plurality of gratings comprises:

   at least one first grating for diffracting the at least one signal output from the at least one display panel so that the at least one signal propagates through the at least one waveguide; and
   at least one second grating for diffracting the at least one signal propagating through the at least one waveguide after being diffracted by the at least one first grating.

3. The system according to claim 1, wherein the plurality of gratings comprises:

   at least one first grating for reflecting the at least one signal output from the at least one display panel and incident on the at least one first grating at a predetermined incidence angle, at a predetermined reflection angle; and
   at least one second grating for reflecting or transmitting the at least one signal propagating through the at least one waveguide and incident upon the at least one second grating at the same angle as the predetermined reflection angle at the at least one first grating, at the same angle as the predetermined incidence angle at the at least one first grating.

4. The system according to claim 1, wherein the plurality of gratings comprises:

   at least one first grating for transmitting the at least one signal output from the at least one display panel and incident on the at least one first grating at a predetermined incidence angle, at a predetermined transmission angle; and
   at least one second grating for transmitting or reflecting the at least one signal propagating through the at least one waveguide and incident upon the at least one second grating at the same angle as the predetermined transmission angle at the at least one first grating, at the same angle as the predetermined incidence angle at the at least one first grating.

5. The system according to one of the claims 1 to 4, wherein the at least one magnifying lens is movable along a predetermined length of the at least one waveguide.

6. The system according to one of claims 1 to 5, wherein the first grating is adjacent to the display panel and is a transmission type for transmitting the signal output from the display panel and incident upon the first grating at a predetermined incidence angle, in the left and right directions within the waveguide at a predetermined transmission angle.

**7.** The system according to claim 6, wherein each of the second gratings is a reflection type for reflecting the signal propagating through the waveguide and incident upon the second gratings at the same angle as the predetermined transmission angle at the first grating, at the same angle as the predetermined incidence angle at the first grating.

**8.** The system according to claim 6, wherein each of the second gratings is a transmission type for transmitting the signal propagating through the waveguide and incident upon the second grating at the same angle as the predetermined transmission angle at the first grating, at the same angle as the predetermined incidence angle at the first grating.

**9.** The system according to claim 6, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

**10.** The system according to one of claims 1 to 5, wherein the first grating is positioned opposite to the display panel in the waveguide and is a reflection type for reflecting a signal output from the display panel and incident upon the first grating at a predetermined incidence angle, at a predetermined reflection angle both in the left and right directions within the waveguide.

**11.** The system according to claim 10, wherein each of the second gratings is a transmission type for transmitting the signal propagating through the waveguide and incident upon the second grating at the same angle as the predetermined reflection angle at the first grating, at the same angle as the predetermined incidence angle at the first grating.

**12.** The system according to claim 10, wherein each of the second gratings is a reflection type for reflecting the signal propagating through the waveguide and incident upon the second grating at the same angle as the predetermined reflection angle at the first grating, at the same angle as the predetermined incidence angle at the first grating.

**13.** The system according to claim 10, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

**14.** The system according to one of the claims 1 to 13, wherein each of the magnifying lenses is movable along a predetermined length of the waveguide.

**Patentansprüche**

**1.** Tragbares Anzeigesystem mit einer Binokularstruktur, wobei das System umfasst:

ein Anzeigefeld (500), mit dem wenigstens ein Signal ausgegeben wird, das auf vorgegebene Weise verarbeitet ist;
einen Wellenleiter (510), mit dem die Ausbreitung des wenigstens einen von dem Anzeigefeld (500) ausgegebenen Signals geleitet wird;
eine Vielzahl von Gittern (520, 522, 524), mit denen das wenigstens eine Signal geleitet wird, das sich über den Wellenleiter (510) ausbreitet;
Vergrößerungslinsen (530, 532), mit dem das wenigstens eine durch wenigstens eines der Gitter gebeugte Signal vergrößert wird; und
einen ersten und einen zweiten Verschluss (1100, 1110), die so eingerichtet sind, dass sie eine Wellenbahn in dem Wellenleiter abwechselnd sperren und öffnen, um ein dreidimensionales Bild zu erzeugen,

wobei das Anzeigefeld (500) in der Mitte des Wellenleiters angeordnet ist und die Vielzahl von Gittern umfasst:

ein erstes Gitter (520), mit dem das Signal, das von dem Anzeigefeld ausgegeben wird und auf das erste Gitter in einem vorgegebenen Einfallswinkel auftrifft, in einem vorgegebenen Beugungswinkel sowohl in der linken als auch der rechten Richtung von dem Wellenleiter gebeugt wird; und

zweite Gitter (522, 524), mit denen das Signal, das durch das erste Gitter sowohl in der linken als auch der rechten Richtung des Wellenleiters so gebeugt wird, dass es sich über den Wellenleiter ausbreitet und auf die zweiten Gitter in dem selben Winkel wie der vorgegebene Beugungswinkel bei dem ersten Gitter auftrifft, in dem selben Winkel wie der vorgegebene Einfallswinkel bei dem ersten Gitter gebeugt wird,

wobei die Vergrößerungslinsen (530, 532) zum Vergrößern des durch die zweiten Gitter gebeugten Signals eingerichtet sind.

2. System nach Anspruch 1, wobei die Vielzahl von Gittern umfasst:

wenigstens ein erstes Gitter, mit dem das wenigstens eine Signal, das von dem wenigstens einen Anzeigefeld ausgegeben wird, so gebeugt wird, dass sich das wenigstens eine Signal über den wenigstens einen Wellenleiter ausbreitet; und

wenigstens ein zweites Gitter, mit dem das wenigstens eine Signal, das sich über den wenigstens einen Wellenleiter ausbreitet, gebeugt wird, nachdem es durch das wenigstens eine erste Gitter gebeugt worden ist.

3. System nach Anspruch 1, wobei die Vielzahl von Gittern umfasst:

wenigstens ein erstes Gitter, mit dem das wenigstens eine Signal, das von dem wenigstens einen Anzeigefeld ausgegeben wird und auf das wenigstens eine erste Gitter in einem vorgegebenen Einfallswinkel auftrifft, in einem vorgegebenen Reflexionswinkel reflektiert wird; und

wenigstens ein zweites Gitter, mit dem das wenigstens eine Signal, das sich über den wenigstens einen Wellenleiter ausbreitet und auf das wenigstens eine zweite Gitter in dem selben Winkel wie der vorgegebene Reflexionswinkel bei dem wenigstens einen ersten Gitter auftrifft, in dem selben Winkel wie der vorgegebene Einfallswinkel bei dem wenigstens einen ersten Gitter reflektiert oder transmittiert wird.

4. System nach Anspruch 1, wobei die Vielzahl von Gittern umfasst:

wenigstens ein erstes Gitter, mit dem das wenigstens eine Signal, das von dem wenigstens einen Anzeigefeld ausgegeben wird und auf das wenigstens eine erste Gitter in einem vorgegebenen Einfallswinkel auftrifft, in einem vorgegebenen Transmissionswinkel durchgelassen wird; und

wenigstens ein zweites Gitter, mit dem das wenigstens eine Signal, das sich über den wenigstens einen Wellenleiter ausbreitet und auf das wenigstens eine zweite Gitter in dem selben Winkel wie der vorgegebene Transmissionswinkel bei dem wenigstens einen ersten Gitter auftrifft, in dem selben Winkel wie dem vorgegebenen Einfallswinkel bei dem wenigstens einen ersten Gitter transmittiert oder reflektiert wird.

5. System nach einem der Ansprüche 1 bis 4, wobei die wenigstens eine Vergrößerungslinse entlang eines vorgegebenen Abschnitts des wenigstens einen Wellenleiters bewegt werden kann.

6. System nach einem der Ansprüche 1 bis 5, wobei das erste Gitter an das Anzeigefeld angrenzt und einem Transmissionsgitter ist, und damit das Signal, das von dem Anzeigefeld ausgegeben wird und auf das erste Gitter in einem vorgegebenen Einfallswinkel auftrifft, in der linken und der rechten Richtung innerhalb des Wellenleiters in einem vorgegebenen Transmissionswinkel transmittiert wird.

7. System nach Anspruch 6, wobei jedes der zweiten Gitter ein Reflexionsgitter ist, und damit das Signal, das sich über den Wellenleiter ausbreitet und auf die zweiten Gitter in dem selben Winkel wie der vorgegebenen Transmissionswinkel bei dem ersten Gitter auftrifft, in dem selben Winkel wie der vorgegebenen Einfallswinkel bei dem ersten Gitter reflektiert wird.

8. System nach Anspruch 6, wobei jedes der zweiten Gitter ein Transmissionsgitter ist, und damit das Signal, das sich über den Wellenleiter ausbreitet und auf die zweiten Gitter in dem selben Winkel wie der vorgegebenen Transmissionswinkel bei dem ersten Gitter auftrifft, in dem selben Winkel wie der vorgegebene Einfallswinkel bei dem ersten Gitter transmittiert wird.

9. System nach Anspruch 6, wobei eines der zweiten Gitter ein Transmissionsgitter ist, und damit das Signal, das sich über den Wellenleiter ausbreitet und auf das eine zweite Gitter in dem selben Winkel wie der vorgegebene Einfallswinkel bei dem ersten Gitter auftrifft, in dem selben Winkel wie der vorgegebene Einfallswinkel bei dem ersten transmittiert wird, während ein anderes der zweiten Gitter ein Reflexionsgitter ist, und damit das Signal, das sich über den Wellenleiter ausbreitet und auf das andere zweite Gitter in dem selben Winkel wie der vorgegebene Transmissionswinkel bei dem ersten Gitter auftrifft, in dem selben Winkel wie der vorgegebene Einfallswinkel bei dem ersten Gitter reflektiert wird.

10. System nach einem der Ansprüche 1 bis 5, wobei das erste Gitter dem Anzeigefeld gegenüberliegend in dem Wellenleiter angeordnet ist und ein Reflexionsgitter ist, und damit ein Signal, das von dem Anzeigefeld ausgegeben wird und auf das erste Gitter in einem vorgegebenen Einfallswinkel auftrifft, in einem vorgegebenen Reflexionswinkel sowohl in der linken als auch der rechten Richtung innerhalb des Wellenleiters reflektiert wird.

11. System nach Anspruch 10, wobei jedes der zweiten Gitter ein Transmissionsgitter ist, und damit das Signal, das sich über den Wellenleiter ausbreitet und auf das zweite Gitter in dem selben Winkel wie der vorgegebene Reflexionswinkel bei dem ersten Gitter auftrifft, in dem selben Winkel wie der vorgegebene Einfallswinkel bei dem ersten Gitter transmittiert wird.

12. System nach Anspruch 10, wobei jedes der zweiten Gitter ein Reflexionsgitter ist, und damit das Signal, das sich über den Wellenleiter ausbreitet und auf das zweite Gitter in dem selben Winkel wie der vorgegebene Reflexionswinkel bei dem ersten Gitter auftrifft, in dem selben Winkel wie der vorgegebene Einfallswinkel bei dem ersten Gitter zu reflektiert wird.

13. System nach Anspruch 10, wobei eines der zweiten Gitter ein Transmissionsgitter ist, und damit das Signal, das sich über den Wellenleiter ausbreitet und auf das eine zweite Gitter in dem selben Winkel wie der vorgegebene Einfallswinkel bei dem ersten Gitter auftrifft, in dem selben Winkel wie der vorgegebene Einfallswinkel bei dem ersten Gitter transmittiert wird, während ein anderes der zweiten Gitter ein Reflexionsgitter ist, und damit das Signal, das sich über den Wellenleiter ausbreitet und auf das andere zweite Gitter in dem selben Winkel wie der vorgegebene Transmissionswinkel bei dem ersten Gitter auftrifft, in dem selben Winkel wie der vorgegebene Einfallswinkel bei dem ersten Gitter reflektiert wird.

14. System nach einem der Ansprüche 1 bis 13, wobei jede der Vergrößerungslinsen entlang eines vorgegebenen Abschnitts des Wellenleiters bewegt werden kann.

**Revendications**

1. Système d'affichage à porter sur le corps et présentant une structure binoculaire, dans lequel le système comprend :

un panneau d'affichage (500) pour fournir au moins un signal de sortie traité d'une façon prédéterminée ;
un guide d'ondes (510) pour guider la propagation de l'au moins un signal de sortie du panneau d'affichage (500) ;
une pluralité de réseaux (520, 522, 524) pour diffracter l'au moins un signal se propageant à travers le guide d'ondes (510) ;
des loupes (530, 532) pour amplifier l'au moins un signal diffracté par au moins un des réseaux ; et
un premier et un second obturateur (1100, 1110) agencés pour bloquer et ouvrir alternativement un trajet d'onde dans le guide d'ondes afin de créer une image tridimensionnelle,

dans lequel le panneau d'affichage (500) est placé au centre du guide d'ondes et dans lequel la pluralité de réseaux comprend :

un premier réseau (520) pour diffracter le signal de sortie du panneau d'affichage, incident sur le premier réseau selon un angle d'incidence prédéterminé, aussi bien vers la gauche que vers la droite du guide d'ondes à un angle de diffraction prédéterminé ; et
des seconds réseaux (522, 524) pour diffracter le signal, qui est diffracté par le premier réseau aussi bien vers la gauche que vers la droite du guide d'ondes pour se propager à travers le guide d'ondes et être incident sur les seconds réseaux selon un angle égal à l'angle de diffraction prédéterminé sur le premier réseau, à un angle égal à l'angle d'incidence prédéterminé sur le premier réseau,

dans lequel lesdites loupes (530, 532) sont agencées pour amplifier le signal diffracté par les seconds réseaux.

**2.** Système selon la revendication 1, dans lequel la pluralité de réseaux comprend :

au moins un premier réseau pour diffracter l'au moins un signal de sortie de l'au moins un panneau d'affichage de telle sorte que l'au moins un signal se propage à travers l'au moins un guide d'ondes ; et
au moins un second réseau pour diffracter l'au moins un signal se propageant à travers l'au moins un guide d'ondes après diffraction par l'au moins un premier réseau.

**3.** Système selon la revendication 1, dans lequel la pluralité de réseaux comprend :

au moins un premier réseau pour réfléchir l'au moins un signal de sortie de l'au moins un panneau d'affichage et incident sur l'au moins un premier réseau selon un angle d'incidence prédéterminé, à un angle de réflexion prédéterminé ; et
au moins un second réseau pour réfléchir ou transmettre l'au moins un signal se propageant à travers l'au moins un guide d'ondes et incident sur l'au moins un second réseau selon un angle égal à l'angle de réflexion prédéterminé sur l'au moins un premier réseau, à un angle égal à l'angle d'incidence prédéterminé sur l'au moins un premier réseau.

**4.** Système selon la revendication 1, dans lequel la pluralité de réseaux comprend :

au moins un premier réseau pour transmettre l'au moins un signal de sortie de l'au moins un panneau d'affichage et incident sur l'au moins un premier réseau selon un angle d'incidence prédéterminé, à un angle de transmission prédéterminé ; et
au moins un second réseau pour transmettre ou réfléchir l'au moins un signal se propageant à travers l'au moins un guide d'ondes et incident sur l'au moins un second réseau selon un angle égal à l'angle de transmission prédéterminé sur l'au moins un premier réseau, à un angle égal à l'angle d'incidence prédéterminé sur l'au moins un premier réseau.

**5.** Système selon l'une des revendications 1 à 4, dans lequel l'au moins une loupe est mobile sur une longueur prédéterminée de l'au moins un guide d'ondes.

**6.** Système selon l'une des revendications 1 à 5, dans lequel le premier réseau est adjacent au panneau d'affichage, de type transmissif pour transmettre le signal de sortie du panneau d'affichage et incident sur le premier réseau selon un angle d'incidence prédéterminé, vers la gauche et vers la droite dans le guide d'ondes à un angle de transmission prédéterminé.

**7.** Système selon la revendication 6, dans lequel chacun des seconds réseaux est de type réflectif pour réfléchir le signal se propageant à travers le guide d'ondes et incident sur le second réseau selon un angle égal à l'angle de transmission prédéterminé sur le premier réseau, à un angle égal à l'angle d'incidence prédéterminé sur le premier réseau.

**8.** Système selon la revendication 6, dans lequel chacun des seconds réseaux est de type transmissif pour transmettre le signal se propageant à travers le guide d'ondes et incident sur le second réseau selon un angle égal à l'angle de transmission prédéterminé sur le premier réseau, à un angle égal à l'angle d'incidence prédéterminé sur le premier réseau.

**9.** Système selon la revendication 6, dans lequel l'un des seconds réseaux est de type transmissif pour transmettre le signal se propageant à travers le guide d'ondes et incident sur ledit second réseau selon un angle égal à l'angle de transmission prédéterminé sur le premier réseau, à un angle égal à l'angle d'incidence prédéterminé sur le premier réseau, alors qu'un autre des seconds réseaux est de type réflectif pour réfléchir le signal se propageant à travers le guide d'ondes et incident sur ledit autre second réseau selon un angle égal à l'angle de transmission prédéterminé sur le premier réseau, à un angle égal à l'angle d'incidence prédéterminé sur le premier réseau.

**10.** Système selon l'une des revendications 1 à 5, dans lequel le premier réseau est positionné en face du panneau d'affichage dans le guide d'ondes, de type réflectif pour réfléchir un signal de sortie du panneau d'affichage et incident sur le premier réseau selon un angle d'incidence prédéterminé, avec un angle de réflexion prédéterminé aussi bien vers la gauche que vers la droite dans le guide d'ondes.

**11.** Système selon la revendication 10, dans lequel chacun des seconds réseaux est de type transmissif pour transmettre le signal se propageant à travers le guide d'ondes et incident sur le second réseau selon un angle égal à l'angle de réflexion prédéterminé sur le premier réseau, à un angle égal à l'angle d'incidence prédéterminé sur le premier réseau.

**12.** Système selon la revendication 10, dans lequel chacun des seconds réseaux est de type réflectif pour réfléchir le signal se propageant à travers le guide d'ondes et incident sur le second réseau selon un angle égal à l'angle de réflexion prédéterminé sur le premier réseau, à un angle égal à l'angle d'incidence prédéterminé sur le premier réseau.

**13.** Système selon la revendication 10, dans lequel l'un des seconds réseaux est de type transmissif pour transmettre le signal se propageant à travers le guide d'ondes et incident sur ledit second réseau selon un angle égal à l'angle de transmission prédéterminé sur le premier réseau, à un angle égal à l'angle d'incidence prédéterminé sur le premier réseau, alors qu'un autre des seconds réseaux est de type réflectif pour réfléchir le signal se propageant à travers le guide d'ondes et incident sur ledit autre second réseau selon un angle égal à l'angle de transmission prédéterminé sur le premier réseau, à un angle égal à l'angle d'incidence prédéterminé sur le premier réseau.

**14.** Système selon l'une des revendications 1 à 13, dans lequel chacune des loupes est mobile sur une longueur prédéterminée de l'au moins un guide d'ondes.

# FIG. 1 (PRIOR ART)

110    100

EP 1 736 812 B1

# FIG. 2 (PRIOR ART)

EP 1 736 812 B1

FIG. 3 (PRIOR ART)

EP 1 736 812 B1

# FIG. 4A

410

400

# FIG. 4B

410

400

# FIG. 5

522      500      524

θ    θ θ    θ

510

530      520      532

# FIG. 6

610

θ

θ

600

d

# FIG. 7A

# FIG. 7B

REFRACTIVE
INDEX n

# FIG. 7C

REFRACTIVE
INDEX n

# FIG. 8A

# FIG. 8B

# FIG. 8C

# FIG. 8D

# FIG. 8E

# FIG. 8F

# FIG. 8G

# FIG. 8H

# FIG. 9

930    932

924

926
920    928
922

# FIG. 10A

1006    1010    1012    1008

1000    1004    1002

# FIG. 10B

1026    1030    1032    1028

1020    1024    1022

# FIG. 11

1100          1110

# FIG. 12A

1230

1200          1210

# FIG. 12B

1230

1200(1210)

# FIG. 13

1330          1300

$\theta$          $\theta$          1310

1340          1320

# FIG. 14A

1406    1402 1404

1400

1404    1406

# FIG. 14B

1416    1414

1410

1412

1414    1416

# FIG. 14C

1426              1424

1420

1422

1424

1426

# FIG. 14D

1436           1432  1434

1430

1436

1434

# FIG. 14E

# FIG. 14F

## FIG. 14G

## FIG. 14H

## FIG. 15A

## FIG. 15B

# FIG. 16A

# FIG. 16B

# FIG. 17A

# FIG. 17B

# FIG. 17C

FIG. 18A

FIG. 18B

FIG. 18C

FIG. 18D

FIG. 18E

**REFERENCES CITED IN THE DESCRIPTION**

**Patent documents cited in the description**

- US 5812186 A
- EP 0535402 A